# EUROPÄISCHE PATENTSCHRIFT

(11) **EP 0 706 543 B1**
(45) Veröffentlichungstag und Bekanntmachung des Hinweises auf die Patenterteilung: **05.11.1997**
(21) Anmeldenummer: 95917959.9
(22) Anmeldetag: 26.04.1995
(51) Int. Cl.: C09D 5/02, C09D 133/06, C09D 175/04

(54) **MODULSYSTEM UND VERFAHREN ZUR HERSTELLUNG WÄSSRIGER ÜBERZUGSMITTEL**
MODULAR SYSTEM AND PROCESS FOR PRODUCING AQUEOUS COATING COMPOSITIONS
SYSTEME MODULAIRE ET PROCEDE DE PRODUCTION DE COMPOSITIONS DE REVETEMENT AQUEUSES

(30) Priorität: 30.04.1994 DE 4415292
(43) Veröffentlichungstag der Anmeldung: 17.04.1996
(73) Patentinhaber: Herberts Gesellschaft mit beschränkter Haftung, 42285 Wuppertal (DE)
(72) Erfinder: HEUWINKEL, Heike, D-45549 Sprockhövel (DE); LENHARD, Werner, D-42289 Wuppertal (DE); PATZSCHKE, Hans-Peter, D-42279 Wuppertal (DE); VOGT-BIRNBRICH, Bettina, D-42719 Solingen (DE)
(74) Vertreter: Türk, Gille, Hrabal, Leifert
(86) Internationale Anmeldenummer: EP9501567
(87) Internationale Veröffentlichungsnummer: WO9529960

(56) Entgegenhaltungen:
- EP-A- 0 452 786
- DE-A- 4 134 290

## Beschreibung

Die Erfindung betrifft ein Modulsystem (aus Modulen aufgebautes Mischsystem), das zur Herstellung von verschiedenartigen wäßrigen Überzugsmitteln geeignet ist. Insbesondere ist es sowohl zur Herstellung von Effekt-Wasserbasislacken, Uni-Wasserbasislacken und wäßrigen Einschicht-Decklacken mit abstimmbarem Farbton und/oder Effekt, als auch zur Herstellung von Wasserklarlacken geeignet, welche besonders in der Fahrzeug- und Fahrzeugteilelackierung Anwendung finden können.

In der Fahrzeug- und Fahrzeugteilelackierung setzt sich der Einsatz wasserverdünnbarer Lacksysteme immer mehr durch. Speziell im Bereich wäßriger Basislacke besteht z.B. die Forderung nach einer ständig wachsenden Anzahl von Farbtönen und Effekt-Farbtönen, was eine rationelle Fertigung und Lagerung zunehmend erschwert. Ein Weg zur Lösung dieses Problems besteht in der Bereitstellung einer begrenzten Anzahl lagerfähiger Einzelbausteine, die nach gewünschtem Effekt oder Farbton kurz vor der Applikation zum fertigen, wäßrigen Basislack kombiniert werden.

So beschreibt die EP-A-0 399 427 ein Wasserbasislack-Baukastensystem bestehend aus fünf Bausteinen, die nach Kombination einen fertigen Wasserbasislack ergeben. Dabei muß der Effektbaustein, der Baustein mit den Effektpigmenten, wasserfrei hergestellt und gelagert werden. Dies geschieht durch Aufschließen z.B. metallischer Pigmente in einem in Lösemittel gelösten Alkyd-, Acrylat- oder Polyesterharz und organischem Lösemittel. Die damit formulierten Wasserbasislacke weisen somit einen unerwünscht hohen Lösungsmittelanteil auf. Außerdem ist ein separater Neutralisationsbaustein notwendig, der zur Neutralisation der sauren Harze in Effekt-, Harz- und Pigment-Baustein Ammoniak enthält.

Weiterhin werden in der EP-A-0 468 293 sowie in der EP-A-0 471 972 wäßrige Lacke auf Basis von verschiedenen Bausteinen beschrieben. Es ist jedoch erforderlich, daß der Effektbaustein wasserfrei ist. Die in Effektbaustein und Pigmentbaustein enthaltenen Harze sind anionisch oder gegebenenfalls nicht-ionisch modifiziert. Zur Neutralisation ist hier ebenfalls ein Ammoniak enthaltender Neutralisationsbaustein vorgesehen.

Die DE-A-4 110 520 beschreibt ein Mischsystem, das geeignet sein soll, wäßrige pigmentierte Beschichtungsmittel mit genau festgelegter Tönung herzustellen. Insbesondere sollen damit Wasserbasislacke hergestellt werden. Das Mischsystem besteht aus verschiedenen Basisfarben (A), die weniger als 5 Gew.-% Wasser enthalten, bevorzugt wasserfrei sind und Pigmente, Lösemittel sowie wasserverdünnbare Bindemittel enthalten, und einer pigmentfreien Wasser enthaltenden Komponente (B), die insbesondere wasserverdünnbare Bindemittel und/oder Rheologieadditive enthält. Die in Komponente A) enthaltenen wasserverdünnbaren Bindemittel liegen in organischen Lösemitteln vor. Die so formulierten Wasserbasislacke weisen deshalb einen unerwünscht hohen Lösemittelanteil auf. Die fertigen Überzugsmittel werden durch Mischen der Komponenten direkt vor der Applikation hergestellt, sie sind nicht lagerstabil.

In den noch nicht veröffentlichten deutschen Anmeldungen P 4 307 498 und P 4 301 991 der gleichen Anmelderin werden Modul systeme (Mischsysteme) zur Herstellung von wäßrigen Uni- und Effektbasislacken beschrieben, die jeweils aus einem Bindemittelmodul und einem Farb- und/oder Effektmodul bestehen. Sowohl im Bindemittel- aus auch im Farb- und Effektmodul sind anionisch und/oder nicht-ionisch stabilisierte wasserverdünnbare Harze enthalten.

Aufgabe der Erfindung ist die Bereitstellung eines Modulsystems (Mischsystems), welches ausgehend von einem einheitlichen Bindemittelmodul durch geeignete Zusammenstellung der einzelnen Modulbausteine zur Herstellung verschiedener wäßriger Überzugsmittel, wie Basislacke, Einschichtdecklacke und/oder Klarlacke, eingesetzt werden kann. Dabei sollen sowohl die einzelnen Modulbausteine als auch die daraus herstellbaren Überzugsmittel über lange Zeit lagerstabil sein und einen geringen Lösemittelgehalt aufweisen. Die einzelnen Modulbausteine des Systems sollen einfach miteinander vermischbar sein, um das jeweils gewünschte Überzugsmittel zu erzielen.

Es hat sich gezeigt, daß diese Aufgabe gelöst werden kann durch Bereitstellung eines wäßrigen Modulsystems auf der Basis kationisch stabilisierter Harze. Das Modulsystem besteht aus mindestens zwei Modulbausteinen, wobei es sich bei einem der Modulbausteine jeweils um ein wäßriges Bindemittelmodul handelt und der zweite Modulbaustein in Abhängigkeit von der Verwendung der mit dem Modulsystem hergestellten Überzugsmittel bzw. in Abhängigkeit vom gewünschten erzielbaren Effekt ausgewählt wird aus einem Farbmodul, einem Effektmodul, einem Vernetzermodul und/oder einem Rheologiemodul.

Ein Gegenstand der Erfindung ist somit ein Modulsystem zur Herstellung von wäßrigen Überzugsmitteln, enthaltend
A) mindestens ein wäßriges, ein oder mehrere kationisch stabilisierte wasserverdünnbare (Meth)acrylcopolymere und ein oder mehrere kationisch stabilisierte wasserverdünnbare Polyurethanharze und/oder ein oder mehrere kationisch stabilisierte wasserverdünnbare (meth)acrylierte Polyurethanharze, gegebenenfalls in Kombination mit nicht-ionisch stabilisierten wasserverdünnbaren Bindemitteln, Wasser sowie gegebenenfalls ein oder mehrere organische Lösemittel und/oder lackübliche Additive enthaltendes Bindemittelmodul,
   zusammen mit mindestens einem der folgenden Module:
B) ein oder mehrere Wasser enthaltende, ein oder mehrere Farbpigmente und/oder Füllstoffe und ein oder mehrere kationisch stabilisierte Polyurethan-Pastenharze, mindestens 6 Gew.-% Wasser, sowie gegebenenfalls ein oder mehrere wasserverdünnbare kationisch und gegebenenfalls nicht-ionisch stabilisierte Bindemittel, ein oder mehrere organische Lösemittel und/oder lackübliche Additive enthaltende Farbmodule,
   und/oder
C) ein oder mehrere Wasser enthaltende, ein oder mehrere Effektpigmente, mindestens 6 Gew.-% Wasser, ein oder mehrere kationisch stabilisierte wasserverdünnbare (meth)acrylierte Polyurethanharze, die gegebenenfalls in Kombination mit weiteren kationisch oder nicht-ionisch stabilisierten wasserverdünnbaren Bindemitteln vorliegen können sowie gegebenenfalls ein oder mehrere organische Lösemittel und/oder lackübliche Additive enthaltende Effektmodule und/oder
D) ein oder mehrere, ein oder mehrere Vernetzungsmittel sowie gegebenenfalls ein oder mehrere organische Lösemittel, Wasser und/oder lackübliche Additive enthaltende Vernetzermodule und/oder
E) ein oder mehrere, ein oder mehrere organische und/oder anorganische die Rheologie steuernde Mittel sowie gegebenenfalls ein oder mehrere kationisch, oder kationisch und nicht-ionisch und/oder nicht-ionisch stabilisierte wasserverdünnbare Bindemittel und/oder ein oder mehrere organische Lösemittel und/oder Wasser enthaltende Rheologiemodule.

Unter Modul werden hier lagerstabile Bausteine verstanden, aus denen durch Mischen ein fertiges Überzugsniittel hergestellt werden kann, das gegebenenfalls noch auf Applikationsviskosität eingestellt werden kann.

Es hat sich gezeigt, daß durch das Vermischen der einzelnen erfindungsgemäß bereitgestellten Module verschiedene wäßrige Überzugsmittel bereitgestellt werden können, wie beispielsweise Effektwasserbasislacke, Uni-Wasserbasislacke, Einschichtdecklacke und Klarlacke, ohne daß dabei auf verschiedene Ausgangsmaterialien zurückgegriffen werden muß. Hierdurch ergibt sich der Vorteil, ausgehend von einheitlichen Bausteinen Überzugsmittel für verschiedene Anwendungszwecke bereitzustellen. Dies kann durch geeignete Auswahl der im Rahmen des erfindungsgemäßen Modulsystems vorgegebenen Modulbausteine erfolgen; auch ist es möglich durch Vermischen der einzelnen Module gewünschte abstimmbare Farbtönungen und/oder Effekte zu erhalten.

Es hat sich gezeigt, daß erfindungsgemäß stabile Module und Gesamtsysteme erhalten werden können, wenn Farb- und Effektmodule mindestens 6 Gew.-%, bevorzugt mindestens 10 Gew.-% Wasser enthalten.

Unter Einschichtdecklacken, die aus dem erfindungsgemäßen Modul system hergestellt werden können, sollen hierbei solche Überzugsmittel verstanden werden, die in einer Mehrschichtlackierung anstatt des üblichen Zweischichtaufbaus Basislack/Klarlack die abschließende Schicht bilden.

Von jedem der Module A) bis E) können verschiedene Ausführungsformen bereitgestellt werden.

Neben dem aufgezeigten Modulsystem betrifft die Erfindung ein Verfahren zur Herstellung von wäßrigen Überzugsmitteln durch Vermischen von mindestens einer wäßrigen Bindemittelkomponente mit weiteren Überzugsmittelkomponenten, das dadurch gekennzeichnet ist, daß man getrennt voneinander jeweils einen Vorrat an mindestens einem lagerstabilen Bindemittelmodul A), sowie mindestens ein lagerstabiles Farbmodul B), Effektmodul C), Vernetzermodul D) und/oder Rheologiemodul E) bereitstellt und gegebenenfalls einlagert, wobei man bei Bedarf die einzelnen Module in solchen Mengen miteinander vermischt, daß der aus ihnen stammende Festkörpergehalt (FK), jeweils bezogen auf den Gesamtfestkörpergehalt des Überzugsmittels, die folgenden prozentualen Werte einnimmt:

| | |
|---|---|
| Bindemittelmodule A) | 5 bis 99 Gew.-%; |
| Farbmodule B) | 0 bis 60 Gew.-%; |
| Effektmodule C) | 0 bis 50 Gew.-%; |
| Vernetzermodule D) | 0 bis 50 Gew.-% und |
| Rheologiemodule E) | 0 bis 50 Gew.-%. |

wobei die Summe der prozentualen Werte 100 % betragen soll. Insbesondere werden wäßrige Überzugsmittel mit einem Festkörpergehalt bei Applikationsviskosität von 10 bis 80 Gew.-% hergestellt. Die Erfindung betrifft auch die gemäß dem erfindungsgemäßen Verfahren hergestellten wäßrigen Überzugsmittel.

Gemäß einer bevorzugten Ausführungsform enthält das erfindungsgemäß eingesetzte Bindemittelmodul A) 10 - 99 Gew.-% des kationisch stabilisierten (Meth)acrylcopolymeren, 2 - 70 Gew.-% des kationisch stabilisierten Polyurethanharzes und 0,2 - 60 Gew.-% des kationisch stabilisierten (meth)acrylierten Polyurethanharzes, wobei sich die Prozentangaben auf den Gesamt-Bindemittelfestkörpergehalt im Bindemittelmodul beziehen und sich zu 100 % addieren sollen.

Zumindest in einem Teil der erfindungsgemäß bereitgestellten Module werden kationisch stabilisierte wasserverdünnbare Bindemittel gegebenenfalls in Kombination mit nicht-ionisch stabilisierten wasserverdünnbaren Bindemitteln bereitgestellt. Unter "kationisch stabilisiert" soll hier und im folgenden auch der Begriff "kationisch und zusätzlich gegebenenfalls nicht-ionisch stabilisiert" verstanden werden. Unter dem hier verwendeten Ausdruck "wasserverdünnbar" soll auch "wasserlöslich" verstanden werden. Bei den Bindemitteln kann es sich allgemein beispielsweise um (Meth)acrylcopolymere, Polyurethanharze oder (meth)acrylierte Polyurethanharze handeln, die basische Gruppen aufweisen, welche durch zumindest teilweise Neutralisation kationische Gruppen bilden. Die Bindemittel können selbst- oder fremdvernetzend sein. Diese und die im folgenden aufgeführten speziellen Beispiele für diese Bindemittel sind, wie erwähnt, allgemein in den erfindungsgemäßen Modulen einsetzbar; sie eignen sich besonders zweckmäßig für das Bindemittelmodul A).

Als kationische (Meth)acrylcopolymere, Polyurethanharze und/oder (meth)acrylierte Polyurethanharze können beispielsweise solche mit einem Zahlenmittel der Molmasse (Mn) von 500 bis 500000, einer OH-Zahl von 0 bis 450, einer Aminzahl von 20 bis 200 und einer Glasübergangstemperatur von -50°C bis +150°C verwendet werden.

Beispiele für derartige kationische Harze sind beschrieben in DE-A-41 34 301, DE-A-40 11 633, DE-A-41 34 290 und DE-A-42 03 510.

Die basische Gruppen enthaltenden (Meth)acrylcopolymerisatharze haben bevorzugt eine OH-Zahl von 30 - 200, ein Zahlenmittel der Molmasse (Mn) von 1000 bis 200000 und eine Aminzahl von 15 - 150, besonders bevorzugt eine Aminzahl von 25 - 100. Bei Neutralisation liegen sie in wäßrigen Systemen bevorzugt bei einem pH-Wert von 5 bis 7 vor. Besonders bevorzugte (Meth)acrylcopolymerisatharze haben eine zahlenmittlere Molmasse (Mn) von 4000 bis 50000, eine Hydroxylzahl von 60 bis 175, eine Aminzahl von 20 bis 100 und eine Glasübergangstemperatur von -20 bis +75°C. Sie können beispielsweise durch Lösungspolymerisation oder Emulsionspolymerisation bzw. -copolymerisation nach dem Stand der Technik, wie er beispielsweise in der DE-A-15 46 854, der DE-A-23 25 177 oder der DE-A-23 57 152 beschrieben wird, hergestellt werden. Sie werden beispielsweise aus (Meth)acrylatmonomeren gegebenenfalls zusammen mit weiteren radikalisch polymerisierbaren Monomeren hergestellt. Die radikalisch polymerisierbaren Monomeren, d.h. die (Meth)acrylatmonomeren und/oder weiteren radikalisch polymerisierbaren Monomeren sind zumindest teilweise aminogruppenhaltige Monomere oder radikalisch polymerisierbare Monomere, die sowohl Aminogruppen als auch Hydroxylgruppen enthalten können. Sie können im Gemisch mit anderen radikalisch polymerisierbaren Monomeren eingesetzt werden.

Dabei wird bevorzugt so gearbeitet, daß 6 bis 40 Gewichtsteile radikalisch polymerisierbarer aminogruppenhaltiger Monomerer und 4 bis 50 Gewichtsteile radikalisch polymerisierbarer hydroxylgruppenhaltiger Monomerer oder 8 bis 60 Gewichtsteile radikalisch polymerisierbarer hydroxy- und aminogruppenhaltiger Monomerer pro 10 bis 90 Gewichtsteile radikalisch polymerisierbarer Monomeren, die keine weiteren reaktiven Gruppen enthalten, eingesetzt werden. Von den eingesetzten radikalisch polymerisierbaren Monomeren sind bevorzugt mehr als 50 Gew.-% und besonders bevorzugt mehr als 70 Gew.-% (Meth)acrylatmonomere. Diese (Meth)acrylatmonomere können beispielsweise über ihre Esterfunktion Aminogruppen und/oder Hydroxylgruppen enthalten oder können als weitere nicht-funktionelle Monomere auftreten.

Als radikalisch polymerisierbare Monomere sind praktisch alle ethylenisch ungesättigten Monomere geeignet, wie sie für die radikalische Polymerisation geläufig sind und die beispielsweise dem Q-und e-Schema nach Alfrey und Price für die Copolymerisation entsprechen (vergleiche Brandrup und Immergut, Polymer Handbuch, 2nd edition, John Wiley and Sons, New York 1975). Die basischen Poly(meth)acrylatharze können außer oder zusätzlich zu den Aminogruppen auch Oniumgruppen, wie quarternäre Ammoniumgruppen, Sulfonium- oder Phosphoniumgruppen enthalten.
Beispiele für radikalisch polymerisierbare hydroxylgruppenhaltige Monomere sind (Meth)acrylsäure-hydroxylalkylester wie beispielsweise 2-Hydroxyethylacrylat, 2-Hydroxy-propylmethacrylat, Butandiol-1,4-monoacrylat, 2,3-Dihydroxy-propylmethacrylat, Pentaerythritmonomethacrylat, Polypropylenglykolmonoacrylat, Addukte von (Meth)acrylsäure und Glycidylestern, z.B. der Versaticsäure oder auch Fumarsäuredihydroxyalkylester.
Es können jedoch auch N-Hydroxylalkyl(meth)acrylamid oder N-Hydroxyalkylfumarsäure-mono oder diamide wie beispielsweise N-Hydroxylmethyl-acrylamid oder N-(2-Hydroxylpropyl)-methacrylamid eingesetzt werden. Besonders elastische Eigenschaften sind beim Einsatz eines Reaktionsproduktes von Hydroxyalkyl(meth)acrylaten mit epsilon-Caprolacton zu erhalten. Andere hydroxylgruppenhaltige Verbindungen sind Allylalkohol, Monovinylether von Polyalkoholen, besonders von Diolen wie z.B. der Monovinylether des Ethylenglykols oder Butandiols, sowie hydroxylgruppenhaltige Allylether oder -ester wie 2,3-Dihydroxypropylmonoallylether, Trimethylolpropan-monoallylether oder 2,3 Dihydroxypropansäureallylether. Besonders geeignet sind Hydroxyethyl-, Hydroxypropyl- und/oder Butandiol-1,4-mono(meth)acrylat.

Als aminogruppenhaltige Monomere können beispielsweise Monomere der allgemeinen Formel

R - CH = CH' - X - A - N(R'')₂

eingesetzt werden, wobei
- R =: -R' oder -X-CₙH₂ₙ₊₁,
- R' =: -H oder -CₙH₂ₙ₊₁ und
- R" =: -R',-CₙH₂ₙOH und/oder -CₙH₂ₙNR₂ bedeuten, wobei R wie vorstehend definiert ist, und
- X =: -COO-, -CONH-, -CH₂O- oder -O-,
- A =: -CₙH₂ₙ- oder -CₙH₂ₙ-CHOH-CH₂ und
- n =: 1 bis 8, bevorzugt 1 bis 3 bedeuten.

Beispiele für ungesättigte N-gruppenhaltige Monomere sind N-Dialkyl- oder N-Monoalkyl-aminoalkyl(meth)acrylate oder die entsprechenden N-Alkanol-Verbindungen wie beispielsweise N-Diethyl-aminoethylacrylat oder N-tert-Butylaminoethylacrylat, N-Dialkyl- oder N-Monoalkyl-aminoalkyl(meth)acrylamid oder die entsprechenden N-Alkanol-Verbindungen wie beispielsweise N-Dimethyl-amino-ethanolacrylamid und/oder Vinylgruppen enthaltende heterocyclische Verbindungen mit einem oder mehreren basischen Stickstoffatomen wie beispielsweise N-Vinylimidazol.

Die Herstellung von Amino-poly(meth)acrylatharzen der Komponente A) kann auch, wie in der DE 40 11 633 beschrieben, durch polymeranaloge Umsetzung geschehen. So kann man beispielsweise ein Acrylamidgruppen enthaltendes Copolymeres mit Formaldehyd und einem sekundären Amin und/oder Aminoalkohol umsetzen. Ein besonders bevorzugtes Verfahren wird in der DE-A-34 36 346 beschrieben. Hier werden zunächst epoxidgruppenhaltige monoethylenisch ungesättigte Monomere in das Copolymere einpolymerisiert. Danach wird mit überschüssigem Ammoniak, primären und/oder sekundären Monoaminen und/oder Monoaminalkoholen umgesetzt und anschließend der Aminüberschuß abdestilliert.

Eine weitere geeignete Bindemittelgruppe sind beispielsweise kationisch bzw. kationisch/nicht-ionisch stabilisierte Polyurethane. Für deren Aufbau können alle dem Fachmann bekannten üblichen Bausteine eingesetzt werden. Beispielsweise wird bei der Herstellung von Polyurethanharzen das Äquivalentverhältnis des eingesetzten Diisocyanats in Abstimmung mit den eingesetzten Polyolen und Diolen so gewählt, daß das fertiggestellte Polyurethanharz bevorzugt ein Zahlenmittel der Molmasse (Mn) von 3000 bis 200000, besonders bevorzugt von 10000 bis 40000 und eine Aminzahl von 15 bis 120, besonders bevorzugt von 20 bis 100, aufweist. Bei der Neutralisation wird vorzugsweise auf einen pH-Wert von 5 bis 7 eingestellt.

Eine bevorzugte Gruppe von basischen Polyurethanharzen sind urethanisierte Polyester, die auch hydroxyfunktionell sein können, wobei beispielsweise basische Gruppen in der Form von Aminogruppen als Aminoalkohole entweder direkt in den Polyester einkondensiert werden oder schonender mit Hilfe einer Polyaddition in die Polymerkette eingebaut oder an die Polymerkette angehängt werden. So wird beispielsweise ein bevorzugt linearer OH-gruppenhaltiger Polyester aufgebaut durch Umsetzung des Polyesters mit Dialkylaminodialkoholen und Diisocyanaten. Arbeitet man mit einem Isocyanatunterschuß, so muß das Harz nach Neutralisation mit Säuren direkt in Wasser dispergierbar sein. Arbeitet man dagegen mit Isocyanatüberschuß, so kann man das entstehende NCO-Prepolymer in Wasser dispergieren und durch Kettenverlängerung mit einem Polyamin zu einer Polyurethan(harnstoff)dispersion verwandeln. Solche Polyurethan(harnstoff)dispersionen können erfindungsgemäß ebenfalls als Polyurethanharze eingesetzt werden.

Die Herstellung von basische Gruppen enthaltenden Polyurethan(harnstoff)dispersionen erfolgt in bekannter Weise, z.B. durch Kettenverlängerung eines kationischen Prepolymeren mit endständiger Isocyanatgruppe mit Polyolen, Polyaminen und/oder Hydrazin-Verbindungen, wobei die Kettenverlängerung vor oder nach Neutralisation der tert.-Aminogruppen mit diesen in Wasser erfolgt. Die Aminzahl wird durch die bei der Herstellung eingesetzte Menge an kationengruppenhaltigen Verbindungen im isocyanatgruppenhaltigen Prepolymer gesteuert. Die Teilchengröße ist abhängig von der Molmasse des eingesetzten Polyols, z.B. OH-Polyesters (Polyesterpolyols), der Aminzahl und der Aufbausequenz. Die zahlenmittlere Molmasse liegt bevorzugt zwischen 3000 und 500000, besonders bevorzugt über 5000 und unter 50000. Es werden bevorzugt harnstoffgruppenhaltige PolyurethanDispersionen hergestellt, die mindestens 2, bevorzugt 4 Urethangruppen und mindestens eine tert.-Aminogruppen, speziell Dialkylamin-Gruppe im NCO-Prepolymer enthalten.

Die Herstellung der vorstehend diskutierten Polyurethan- und Polyurethan(harnstoff)dispersionen wird beispielsweise ausführlich beschrieben in DE-A-41 34 301 und DE-A-40 11 633.

Weitere im Bindemittelmodul gut einsetzbare Bindemittel sind solche, in denen kationisches Polyurethanharz und (Meth)acrylcopolymer in Form interpenetrierender Harzmoleküle miteinander verbunden vorliegen.

Eine weitere Gruppe von Bindemitteln für das Bindemittelmodul A), welche auch für die Formulierung von Effektmodulen geeignet sind, sind (meth)acrylierte Polyurethandispersionen. Es handelt sich dabei z.B. um sogenannte Polymerdispersionen, die durch Emulsionspolymerisation von (Meth)acrylmonomeren in Polyurethardispersionen, die kationisch und/oder nicht-ionisch stabilisiert sind, hergestellt werden. Die eingesetzten (Meth)acrylmonomeren Können auch kationische Gruppen, in kationische Gruppen überführbare Gruppen (wie Aminogruppen) und/oder nicht-ionische hydrophile Gruppen enthalten; es können unter Verwendung derartiger Monomerer nicht nur bereits stabilisierte Polyurethandispersionen, sondern auch Dispersionen von solchen Polyurethanen stabilisiert werden, die selbst noch keine stabilisierenden Gruppen enthalten. Besonders bevorzugt sind diejenigen Polyurethandispersionen, die durch Emulsionspolymerisation von sogenannten Polyurethanmakromeren, das sind Polyurethane mit kovalent gebundenen terminalen und/oder lateralen Vinylgruppen, mit ungesättigten Monomeren, bevorzugt Derivate der (Meth)acrylsäure, copolymerisiert werden. Die Aminzahl derartiger Dispersionen liegt von 5 - 150, bevorzugt 10 - 100; die Hydroxylzahl von 0 - 150, bevorzugt 15 - 120.

Gemäß einer bevorzugten Ausführungsform werden für das Bindemittelmodul A) als Bindemittel Gemische eingesetzt, welche (Meth)acrylcopolymerisate, wie sie vorstehend beschrieben wurden und Polyurethanharz enthalten. Als (Meth)acrylatcopolymerisate sind insbesondere die vorstehend beschriebenen mit einer OH-Zahl von 30 bis 200, einem Zahlenmittel der Molmasse (Mn) von 100 bis 200000 und einer Aminzahl von 15 bis 150 geeignet. Als Polyurethanharz sind insbesondere die vorstehend beschriebenen mit einem Zahlenmittel der Molmasse (Mn) von 3000 bis 200000 und einer Aminzahl von 15 bis 120 geeignet. Auch diese Gemische liegen im Bindemittelmodul bevorzugt bei einem pH-Wert von 5 bis 7 vor.

In den erfindungsgemäß eingesetzten kationisch stabilisierten Bindemitteln kann die Löslichkeit über die Anzahl der Aminogruppen beeinflußt werden. Die Aminzahl soll bevorzugt 20 bis 200 mg KOH/g Festharz betragen, bevorzugt zwischen 30 und 150. Es können primäre, sekundäre und/oder tertiäre Aminogruppen vorhanden sein. Bevorzugt sind tertiäre Aminogruppen.

Die Hydroxylzahl beeinflußt die Vernetzungsdichte. Sie soll bevorzugt zwischen 20 und 400 liegen. Dabei soll bevorzugt jedes Bindemittelmolekül im Mittel mindestens zwei reaktive Gruppen, z.B. OH- oder NH-Gruppen aufweisen. Die Reaktivität wird von der Art der Gruppen beeinflußt, so sind primäre Amino- oder Hydroxylgruppen reaktiver als sekundäre, wobei NH-Gruppen reaktiver als OH-Gruppen sind. Es ist bevorzugt, daß die Bindemittel reaktive Aminogruppen enthalten. Die erfindungsgemäßen Bindemittel können anreagiert weitere vernetzungsfähige Gruppen tragen, z.B. blockierte Isocyanatgruppen, Alkoxysilangruppen oder zur Umesterung fähige Gruppen. Es handelt sich dann um selbstvernetzende Bindemittel. Es ist jedoch möglich, zusätzlich Vernetzer den Bindemitteln zuzumischen. Das Molekulargewicht (Mn) der Vernetzer beträgt beispielsweise 500 bis 20000, insbesondere 1000 bis 10000. Die Vernetzer können entweder im Bindemittelmodul A) direkt oder in einem separaten Vernetzermodul D) vorliegen.

Die kationischen Bindemittel können physikalisch trocknend, selbst- oder fremdvernetzend sein; dies gilt insbesondere für die im Bindemittelmodul A) enthaltenen kationischen Bindemittel. Die kationischen Bindemittel können anreagiert vernetzungsfähige Gruppen tragen, z.B. blockierte Isocyanatgruppen oder zur Umesterung fähige Gruppen. Es handelt sich dann um selbstvernetzende Bindemittel. Es ist jedoch auch möglich zusätzliche Vernetzer beispielsweise in einem separaten Vernetzermodul zuzumischen.

In den Modulen, insbesondere im Bindemittelmodul A) können gegebenenfalls auch zusätzlich nicht-ionisch stabilisierte Bindemittel enthalten sein.

Beispiele für geeignete nicht-ionisch stabilisierte Bindemittel sind solche Bindemittel, deren Wasserverdünnbarkeit durch Einbau von Polyethersegmenten in das Harzmolekül erreicht wird. Beispiele für derartige stabilisierte Harze sind Polyurethan- bzw. Polyurethanacrylatharze, wie sie in den EP-A-0 354 261, EP-A-0 422 357 und EP-A-0 424 705 beschrieben sind.

Das im erfindungsgemäßen Modulsystem enthaltene notwendige Bindemittelmodul A) kann ein wäßriges Bindemittel enthalten, es kann aber auch in Kombinationen von wäßrigen Bindemitteln vorliegen. Dabei können die Bindemittel jeweils getrennt hergestellt werden und danach als Einzelmodule gelagert werden oder es wird eine Mischung der Bindemittel hergestellt und dann als ein oder mehrere Mehrkomponenten-Bindemittelmodule gelagert.

Im Bindemittelmodul A) können rheologiesteuernde Mittel und geringe Anteile von üblichen Lösemitteln, bevorzugt weniger als 5 Gew.-% enthalten sein. Der Festkörpergehalt des Bindemittelmoduls beträgt bevorzugt 10 - 50 Gew.-%, besonders bevorzugt 15 - 40 Gew.-%.

Das Bindemittelmodul A) enthält Neutralisationsmittel für die basische Harze. Dabei handelt es sich um Säuren, bevorzugt organische Monocarbonsäuren, wie z.B. Ameisensäure, Essigsäure, Propionsäure. Gut geeignet sind insbesondere Hydroxycarbonsäuren, wie z.B. Milchsäure, Glykolsäure, Diglykolsäure, Apfelsäure, Zitronensäure, Mandelsäure, Weinsäure, Hydroxypropionsäure, Dimethylolpropionsäure. Die Neutralisationsmittel werden in dem die Wasserverträglichkeit bzw. Wasserlöslichkeit bildenden gewünschten AusmaB zugesetzt. Es kann eine vollständige oder teilweise Neutralisation erfolgen. Bevorzugt liegt der pH-Wert im Bindemittelmodul A) bei 5 bis 7.

Das Farbmodul B) ist eine wäßrige Zubereitung, die ein oder mehrere Farbpigmente und/oder Füllstoffe, ein oder mehrere kationisch stabilisierte wasserverdünnbare Polyurethan-Pastenharze, Wasser sowie gegebenenfalls ein oder mehrere wasserverdünnbare kationische Bindemittel gegebenenfalls in Kombination mit nicht-ionisch stabilisierten Bindemitteln, ein oder mehrere organische Lösemittel und/oder lackübliche Additive enthält. Das Wasser ist in einer Menge von mindestens 6 Gew.-%, bevorzugt von mindestens 10 Gew.-% vorhanden.

Bevorzugt enthält jedes Farbmodul B) nicht mehr als vier verschiedene Farbpigmente und/oder Füllstoffe, besonders bevorzugt handelt es sich um nur ein Farbpigment oder nur einen Füllstoff enthaltende wäßrige Farbmodule. In den Farbmodulen der erfindungsgemäßen Systeme können übliche anorganische und/oder organische Farbpigmente und/oder Füllstoffe sowie transparente Pigmente enthalten sein. Beispiele für anorganische oder organische Farbpigmente oder Füllstoffe sind Titandioxid, mikronisiertes Titandioxid, Eisenoxidpigmente, Ruß, Siliciumdioxid, Bariumsulfat, mikronisierter Glimmer, Talkum, Azopigmente, Phthalocyaninpigmente, Chinacridon- oder Pyrrolopyrrolpigmente.

Als im Farbmodul einsetzbare kationisch stabilisierte Polyurethan-Pastenharze haben bevorzugt einen Festkörpergehalt (bezogen auf das Gesamtgewicht des Farbmoduls) von 20 - 50 Gew.-%, eine Viskosität von 0,5 - 50 mPas bei 25°C und sind bevorzugt zu 70 bis 100 % mit Monocarbonsäuren neutralisiert. Beispiele für geeignete Monocarbonsäuren sind die vorstehend bei Beschreibung des Bindemittelmoduls bereits genannten.

Im Farbmodul B) bevorzugt eingesetzte Polyurethan-Pastenharze sind z.B. basische Polyesterurethanharze, bei deren Herstellung das Äquivalentverhältnis des eingesetzten Diisocyanats in Abstimmung mit den eingesetzten Polyolen und Diolen so gewählt wird, daß das fertiggestellte Polyurethanharz, beispielsweise Polyesterurethanharz, ein Zahlenmittel der Molmasse (Mn) von 3000 bis 200000, bevorzugt unter 50000, aufweist. Die OH-Zahl beträgt bevorzugt 0 bis 80, besonders bevorzugt 10 bis 65; die Aminzahl beträgt bevorzugt 15 bis 150, besonders bevorzugt 10 bis 100. Bevorzugt wird das Verhältnis der OH-Gruppen des Polyols, beispielsweise Polyesterpolyols und Diols, zu den NCO-Gruppen des Isocyanats über 1,0 bis 1,2 : 1 gehalten; die Viskosität des Polyurethanharzes, beispielsweise Polyesterurethanharzes, liegt bevorzugt bei 1 bis 30 Pas, besonders bevorzugt über 2 und unter 15 Pas, gemessen 60 %ig in Butoxyethanol bei 25°C.

Das erfindungsgemäß einsetzbare Farbmodul B) kann zusätzlich zum basischen Polyurethan-Pastenharz kationisch stabilisierte wasserverdünnbare Bindemittel, gegebenenfalls in Kombination mit nicht-ionisch stabilisierten Bindemitteln enthalten. Dabei kann es sich beispielsweise um die gleichen Harze handeln, wie sie beim Bindemittelmodul A) bereits beschrieben wurden. Es können jedoch auch andere kationisch stabilisierte Bindemittel enthalten sein, z.B. Polyesterharze.

Weiterhin kann das Farbmodul B) geringe Anteile mindestens eines wassermischbaren Lösemittels enthalten, wie Alkohole, z.B. Monoalkohole, wie Butanol, n-Propanol, Isopropanol; Etheralkohole, z.B. Butoxyethanol, Butoxypropanol, Methoxypropanol, Dialkohole, wie Glykole, z.B. Ethylenglykol, Polyethylenglykol; Trialkohole wie Glycerin; Ketone, z.B. Aceton, Methylethylketon; N-Methylpyrrolidon; Ether, z.B. Dipropylenglykoldimethylether.

Ebenso können Säuren, wie schon bei A) beschrieben, als Neutralisationsmittel enthalten sein. Beispiele sind organische Monocarbonsäuren, wie z.B. Ameisensäure, Essigsäure, Dimethylolpropionsäure.

Es kann günstig sein, wenn das Farbmodul B) ein oder mehrere rheologiesteuernde Mittel enthält. Dabei kann es sich beispielsweise um Substanzen oder Gemische handeln, wie sie bei der Herstellung des Rheologiemoduls E) beschrieben werden. Diese können direkt bei der Herstellung des Farbmoduls zugesetzt werden oder als fertiges Rheologiemodul nachträglich zugemischt werden.

Weiterhin können im Wasser enthaltenden Farbmodul B) lackübliche Additive, wie z.B. Netzmittel, Entschäumer, Verlaufsmittel, Dispergierhilfsmittel enthalten sein.

Die Herstellung des Wasser enthaltenden Farbmoduls B) erfolgt im allgemeinen so, daß das Farbpigment und/oder der Füllstoff im Pastenharz angerieben wird. Das Pastenharz kann nicht-neutralisiert, teilneutralisiert oder vollständig neutralisiert in einem organischen, zumindest teilweise mit Wasser mischbaren Lösemittel oder in wäßriger Lösung oder Dispersion vorliegen. Bevorzugt sind die Wasser enthaltenden Lösungen oder Dispersionen. Dies kann in üblichen, dem Fachmann bekannten Aggregaten geschehen. Danach wird gegebenenfalls mit einem weiteren Anteil an Pastenharz und/oder den gegebenenfalls im Farbmodul (B) enthaltenen kationisch und gegebenenfalls nicht-ionisch stabilisierten wasserverdünnbaren Bindemitteln und/oder weiteren Zusätzen komplettiert.

Es entstehen wäßrige lagerstabile Farbmodule (B) mit einem Pigment- bzw. Füllstoff/Bindemittelverhältnis von beispielsweise 0,01 : 1 bis 10 : 1, bezogen auf das Festkörpergewicht. Der Festkörpergehalt liegt bevorzugt bei 20 - 80 Gew.-%.

Der Wassergehalt im Farbmodul beträgt bevorzugt mindestens 6 Gew.-%, besonders bevorzugt mindestens 10 Gew.-%.

Das Effektmodul C) ist eine wäßrige Zubereitung, die mindestens ein oder mehrere Effektpigmente und Wasser sowie gegebenenfalls ein oder mehrere organische Lösemittel, ein oder mehrere kationisch stabilisierte wasserverdünnbare (meth)acrylierte Polyurethanharze, die in Kombination mit nicht-ionisch stabilisierten wasserverdünnbaren Bindemitteln vorliegen können, sowie gegebenenfalls ein oder mehrere organische Lösemittel und lackübliche Additive enthält.

Als Effektpigmente dienen solche Pigmente, die einen dekorativen Effekt in Lacküberzügen bewirken und zusätzlich, jedoch nicht ausschließlich, einen farbigen Effekt bewirken können. Die Effektpigmente zeichnen sich insbesondere durch einen plättchenartigen Aufbau aus. Beispiele für Effektpigmente sind: Metallpigmente, z.B. aus Aluminium, Kupfer oder anderen Metallen; Interferenzpigmente, wie z.B. metalloxidbeschichtete Metallpigmente, z.B. titandioxidbeschichtetes oder mischoxidbeschichtetes Aluminium, beschichteter Glimmer, wie z.B. titandioxidbeschichteter Glimmer und Graphiteffektpigmente.

Im Handel ist eine Vielzahl dieser Effektpigmente erhältlich, die sich durch Teilchengröße und Teilchenform unterscheiden. Je nach gewünschtem Effekt im Lackfilm wird die Auswahl der Pigmente getroffen. Bevorzugt werden Effektmodule mit nur einem Pigment hergestellt. Es sind jedoch auch Effektmodule möglich, die mehrere verschiedene Effektpigmente enthalten.

Weiterhin kann das Effektmodul geringe Anteile mindestens eines wassermischbaren Lösemittels enthalten, wie z.B. unter A) beschrieben, wie Alkohole, z.B. Monoalkohole, wie Butanol, n-Propanol; Etheralkohole, z.B. Butoxyethanol, Butoxypropanol, Methoxypropanol; Dialkohole, wie Glykole, z.B. Ethylenglykol, Polyethylenglykol; Trialkohole, wie Glycerin; Ketone, z.B. Aceton, Methylethylketon, N-Methylpyrrolidon; Ether, z.B. Dipropylenglykoldimethylether.

Beispiele für im Effektmodul C) verwendbare wasserverdünnbare kationisch stabilisierte (meth)acrylierte Polyurethane sind solche, wie sie vorstehend insbesondere für das Bindemittelmodul A) als (meth)acrylierte Polyurethandispersionen beschrieben wurden, insbesondere mit einer Aminzahl von 5 bis 150, bevorzugt 10 bis 100 und einer Hydroxylzahl von 0 bis 150, bevorzugt 15 bis 120.

Das Effektmodul kann rheologiesteuernde Mittel enthalten. Dabei kann es sich beispielsweise um Substanzen oder Gemische handeln, wie sie nachfolgend bei der Beschreibung des Rheologiemoduls E) beschrieben werden.

Diese können direkt bei der Herstellung zugesetzt werden oder als fertiges Rheologiemodul nachträglich zugemischt werden.

Weiterhin können im wäßrigen Effektmodul lackübliche Additive wie z.B. Netzmittel, Entschäumer, Neutralisationsmittel, Katalysatoren enthalten sein.

Die Herstellung des Wasser enthaltenden Effektmoduls erfolgt im allgemeinen so, daß das effektgebende Pigment, z.B. in Form einer handelsüblichen Paste, vorgelegt wird, mit wasserverdünnbarem organischen Lösemittel und Additiven versetzt und gegebenenfalls anschließend mit der wäßrigen Harzlösung unter Scheren vermischt wird.

Es entstehen wäßrige, lagerstabile Effektmodule mit einem bevorzugten Pigment/Bindemittel-Gewichtsverhältnis von 0,02 : 1 bis 10 : 1. Bevorzugt beträgt dabei der Festkörpergehalt des gesamten Effektmoduls 10 bis 40 Gew.-%. Der Wassergehalt im Effektmodul beträgt mindestens 6 Gew.-%, besonders bevorzugt mindestens 10 Gew.-%.

Das erfindungsgemäße Modulsystem kann auch ein Vernetzermodul D) enthalten. Das Vernetzermodul D) wird insbesondere dann eingesetzt, wenn das zu fertigende Überzugsmittel unter Verwendung solcher Harze hergestellt wird, die vernetzbare Gruppen im Molekül enthalten. Beispiele für im Vernetzermodul enthaltene Vernetzerharze sind übliche Vernetzer, wie Polyisocyanate, Polyamine, blockierte Polyisocyanate, Aminoplastharze, Phenolharze, siloxangruppenhaltige Vernetzer und/oder Umesterungsvernetzer.

Bei den Polyisocyanaten kann es sich um beliebige organische Polyisocyanate mit aliphatisch, cycloaliphatisch und/oder aromatisch gebundenen freien Isocyanatgruppen handeln. Sie sind bei Raumtemperatur flüssig oder durch Zusatz organischer Lösemittel verflüssigt. Die Polyisocyanate weisen bei 23°C beispielsweise eine Viskosität von 1 bis 6000 mPas, vorzugsweise über 5 und unter 3000 mPas auf.

Derartige Polyisocyanate sind allgemein bekannt und z.B. beschrieben in DE-A-38 29 587 oder DE-A-42 26 243.

Bevorzugt handelt es sich bei den Polyisocyanaten um Polyisocyanate oder Polyisocyanatgemische mit ausschließlich aliphatisch und/oder cycloaliphatisch gebundenen Isocyanatgruppen mit einer mittleren NCO-Funktionalität von 1,5 bis 5, bevorzugt 2 bis 3.

Besonders gut geeignet sind beispielsweise "Lackpolyisocyanate" auf Basis von Hexamethylendiisocyanat, 1-Isocyanato-3,3,5-trimethyl-5-isocyanatomethyl-cyclohexan (IPDI) und/oder Bis(isocyanatocyclohexyl)methan und die an sich bekannten Biuret-, Allophanat-, Urethan- und/oder Isocyanuratgruppen aufweisenden Derivate dieser Diisocyanate, die im Anschluß an ihre Herstellung, vorzugsweise durch Destillation vom überschüssigem Ausgangsdiisocyanat bis auf einen Restgehalt von weniger als 0,5 Gew.-% befreit worden sind.

Ebenfalls sehr gut geeignet sind sterisch behinderte Polyisocyanate der allgemeinen Formel 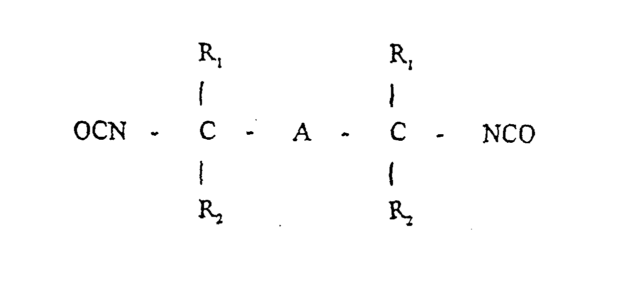 wobei
- R₁ =: H oder R₂,
- R₂ =: CₙH₂ₙ₊₁ mit
- n =: 1 bis 6 sind.

Die Substituenten R₁ und R₂ sind entweder linear oder verzweigt, gleich oder ungleich. Das Grundgerüst A kann aus einer einfachen Bindung, einem aromatischen oder alicyclischen Ring oder aus einer aliphatischen linearen oder verzweigten C-Kette mit 1 bis 12 C-Atomen bestehen.

Beispiele hierfür sind 1,1,6,6-Tetramethyl-hexamethylendiisocyanat, 1,5-Dibutyl-pentamethyldiisocyanat, p- oder m-Tetramethylxylylendiisocyanat der allgemeinen Formel 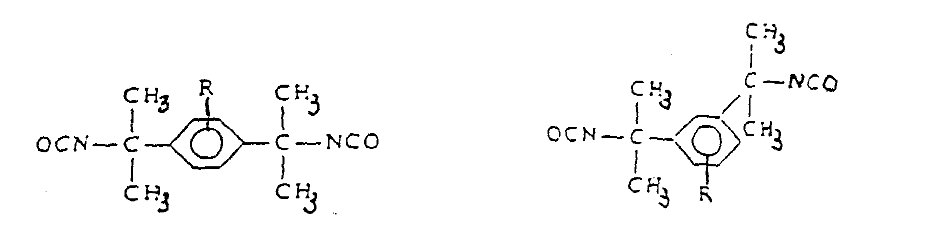 worin R die Bedeutung von H oder C₁ - C₄-Alkyl hat, und die entsprechenden hydrierten Homologen, sowie 2,3-Bis(8-isocyanatooctyl)-4-octyl-5-hexylcyclohexan und 3(4)-Isocyanatomethyl-1-methylcyclohexylisocyanat. Diese Diisocyanate können ebenfalls in geeigneter Weise zu höherfunktionellen Verbindungen umgesetzt werden, beispielsweise durch Trimerisierung oder durch Umsetzung mit Wasser oder Trimethylolpropan.

Beispiele für blockierte Isocyanate sind beliebige Di- und/oder Polyisocyanate, bei denen die Isocyanatgruppen mit einer Verbindung umgesetzt sind, die aktiven Wasserstoff enthält. Als Di- und/oder Polyisocyanate können auch entsprechende isocyanatgruppenhaltige Prepolymere verwendet werden. Es handelt sich z.B. um aliphatische, cycloaliphatische, aromatische, gegebenenfalls auch sterisch gehinderte Polyisocyanate, wie sie jeweils beispielsweise vorstehend bereits beschrieben werden. Bevorzugt werden dreiwertige, z.B. drei- bis fünfwertige aromatische und/oder aliphatische blockierte Isocyanate mit einer zahlenmittleren Molmasse von 500 - 1500.

Als Blockierungsmittel können übliche verwendet werden. So sind z.B. niedermolekulare aciden Wasserstoff enthaltende Verbindungen zum Blockieren von NCO-Gruppen sind bekannt. Beispiele dafür sind aliphatische oder cycloaliphatische Alkohole, Dialkylaminoalkohole, Oxime, Lactame, NH-Gruppen enthaltende Heterocyclen, wie z.B. Pyrazole oder Triazole, Imide, Hydroxylalkylester, Malonsäure- oder Acetessigsäureester.

Als Vernetzerharze ebenfalls geeignet sind Aminoplastharze. Aminoplastharze sind beispielsweise beschrieben in Ullmann "Encyclopedia of Industrial Chemistry", 5. Auflage, Vol. A2, Kapital "Aminoresins", Seiten 115 - 141 (1985) und Houben-Weyl, "Methoden der Organischen Chemie", Band 14/2, Seiten 319 - 399 (1962). Die Harze werden nach dem Stand der Technik hergestellt und von vielen Firmen als Verkaufsprodukte angeboten.

Beispiele für solche Aminoplastharze sind Amin-Formaldehyd-Kondensationsharze, die durch Reaktion von Aldehyden mit Melamin, Guanamin, Benzoguanamin oder Dicyandiamid entstehen. Die Alkoholgruppen der Aldehyd-Kondensationsprodukte werden dann teilweise oder vollständig mit Alkoholen verethert.

Weitere Beispiele für Vernetzungsmittel, die im Vernetzermodul enthalten sein können sind übliche Umesterungsvernetzer. Umesterungsvernetzer sind carboxylgruppenfreie Polyester mit seiten- oder endständigen beta-Hydroxyalkylestergruppen. Es sind Ester von aromatischen Polycarbonsäuren, wie beispielsweise Isophthalsäure, Terephthalsäure, Trimellithsäure oder Gemischen davon. Diese werden z.B. mit Ethylenglykol, Neopentylglykol, Trimethylolpropan und/oder Pentaerythrit kondensiert. Die Carboxylgruppen werden kann mit gegebenenfalls substituierten 1,2-Glykolen unter Bildung von beta-Hydroxyalkylverbindungen umgesetzt. Die 1,2-Glykole können mit gesättigten oder ungesättigten Alkyl-, Ether-, Ester- oder Amidgruppen substituiert sein. Weiter ist auch eine Hydroxyalkylesterbildung möglich, in dem die Carboxylgruppen mit substituierten Glycidylverbindungen, wie z.B. Glycidylethern und Glycidylestern, umgesetzt werden.

Die Umesterungsvernetzer enthalten vorzugsweise mehr als 3 beta-Hydroxylalkylestergruppen pro Molekül und haben ein Gewichtsmittel der Molmasse von 1000 bis 10000, bevorzugt von über 1500 und unter 5000. Die carboxylgruppenfreien Polyester mit seiten- und endständigen beta-Hydroxylalkylestergruppen können hergestellt werden, wie beispielsweise in EP-A-0 012 463 beschrieben.

Als Vernetzerharze geeignete Polyaminvernetzer sind beispielsweise Diamine und Amine mit mehr als zwei Aminogruppen, wobei die Aminogruppen primär und/oder sekundär sein können. Darüber hinaus sind als Polyamine Addukte geeignet, die aus Polyaminen mit mindestens zwei primären Aminogruppen bestehen und über weitere funktionelle Gruppen modifiziert werden können. z.B. mit Epoxyverbindungen, mit Polyisocyanaten oder mit (Meth)acrylolverbindungen. Weiterhin sind als Polyamine Polymere geeignet, in die die aminofunktionellen Gruppen erst nachträglich durch Reaktion eingeführt wurden.

Beispiele für geeignete Polyamine sind in den EP-A-0 240 083 oder EP-A-0 346 982 beschrieben. Beispiele hierfür sind aliphatische und/oder cycloaliphatische Amine mit 2 - 24 Atomen, die 2 - 10 primäre Aminogruppen und 0 - 5 sekundäre Aminogruppen enthalten. Beispiele hierfür sind Hexamethylendiamin, 1,2-Diamincyclohexan, Isophorondiamin, Diethylentriamin oder Polyetherpolyamine.

Beispiele für übliche Polyamine auf der Basis von modifizierten polyfunktionellen Amin-Komponenten mit di- oder polyfunktionellen Epoxyverbindungen sind solche, die hergestellt werden unter Verwendung von beispielsweise Diglycidyl- oder Polyglycidylethern auf Basis von Bisphenol A oder Bisphenol F, Polyglycidylether von Phenolformaldehyd oder Novolaken; Glycidylether von Fettsäuren mit 6 - 24 C-Atomen, epoxidierte Polybutadiene oder glycidylgruppenhaltige Harze wie Polyester oder Polyurethane, die eine oder mehrere Glycidylgruppen im Molekül enthalten.

Es können auch Polyamidoamine verwendet werden, wie sie z.B. in der EP-A-0 262 720 beschrieben sind. Es sind Reaktionsprodukte aus Mono- oder Poly-Carbonsäuren mit Polyaminen, die primäre Aminogruppen enthalten.

Weiterhin können Polyamin/Isocyanataddukte eingesetzt werden. Dabei sind als Isocyanate die auf dem Lacksektor üblichen aliphatischen, cycloaliphatischen und/oder aromatischen Di- oder Polyisocyanate geeignet.

Weitere Methoden zur Synthese von aminofunktionalisierten Härtern sind in der EP-A-0 002 801 sowie der EP-A-0 179 954 beschrieben. Es handelt sich um Copolymere auf Basis von (Meth)acrylsäurederivaten, die mit Diaminen oder Alkyleniminen umgesetzt und funktionalisiert werden.

Das Vernetzermodul D) kann den Vernetzer allein enthalten. Es können jedoch auch ein oder mehrere organische Lösemittel, Wasser und/oder lackübliche Additive enthalten sein. Es handelt sich hierbei beispielsweise um die gleichen Lösemittel und Additive, wie sie für die anderen Module beschrieben sind. Insbesondere können Katalysatoren enthalten sein, welche die Reaktion zwischen Bindemittel und Vernetzerkomponente beschleunigen.

Beim Einsatz von Amin-Formaldehyd-Harzen werden beispielsweise als Katalysatoren Aminsalze oder leicht hydrolysierbare Ester von organischen Sulfonsäuren oder Sulfonamide eingesetzt, wie sie als handelsübliche Produkte erhältlich sind. Bei Kombination mit Polyisocyanaten können metallorganische Katalysatoren, wie Dibutylzinndilaurat, gegebenenfalls in Kombination mit basischen Katalysatoren, wie 1,4-Diazabicyclo[2.2.2]octan, verwendet werden.

Das erfindungsgemäße Modul system kann auch ein Rheologiemodul E) enthalten. Dieses enthält bevorzugt Wasser und als Rheologiekomponente eine oder mehrere das Fließverhalten des fertigen wäßrigen Effektbasislacks steuernde Substanzen.

Beispiele dafür sind Polymermikroteilchen, wie sie beispielsweise in der EP-A-0 038 127 beschrieben sind, anorganische Schichtsilikate, zum Beispiel Aluminium-Magnesium-Silikat, Natrium-Magnesium-Schichtsilikate und Natrium-Magnesium-Fluorlithium-Schichtsilikate des Montmorillonittyps, Assoziativverdicker, z.B. auf Polyurethanbasis oder Celluslosebasis, Polyvinylalkohol, Poly(meth)acrylamid, Polyvinylpyrrolidon und polymere Harnstoffverbindungen, synthetische Polymere mit ionischen Gruppen wie zum Beispiel Poly(meth)acrylsäure. Diese Substanzen sind im Handel in vielfältiger Form erhältlich.

Bevorzugt sind dabei kationische Assoziativverdicker auf Polyurethanbasis.

Bei den Assoziativverdickern auf Polyurethanbasis handelt es sich um Harze, die schematisch folgendermaßen aufgebaut sind: In der Polymerhauptkette sind hydrophile Segmente wie Polyetherstrukturen (wobei diese bevorzugt einen Anteil an Ethylenoxideinheiten, beispielsweise von 35 % oder mehr, falls nur Polyetherstrukturen vorliegen, aufweisen) und oder kationische oder in Kationen überführbare Gruppen eingebaut. An den Kettenenden werden dagegen langkettige hydrophobe Bausteine eingebaut. Sie sind für die verdickende Wirkung derartiger Systeme verantwortlich. Sie werden analog den bereits beschriebenen Methoden der Polyurethansynthese aufgebaut. Hierzu geeignet sind alle dem Fachmann zur Verfügung stehenden gängigen Ausgangsmaterialien für die Polyurethansynthese. Als hydrophobe Modifizierungsmittel dienen bevorzugt langkettige Fettalkohole und Fettamine. Diese enthalten beispielsweise eine lineare Kette mit mindestens 8, bevorzugt mindestens 12 Kohlenstoffatomen, wobei auch vernetzte Anteile möglich sind.

Die Aminzahl von Assoziativverdickern liegt bevorzugt bei 5 bis 100, besonders bevorzugt bei 10 bis 90; die Hydroxylzahl liegt bei 0 bis 70, bevorzugt bei 5 bis 50. Es versteht sich, daß in der vorliegenden Beschreibung die Aminzahl und die OH-Zahl jeweils auf mg KOH/g Festharz bezogen werden, was der üblichen Definition entspricht.

Die verschiedenen Module sind lagerstabil. Es können mehrere gleiche oder unterschiedliche Module zu neuen lagerstabilen Kombinationsmodulen gemischt werden. Beispielsweise können verschiedene Effekt- und/oder Farbmodule gemischt werden.

Durch die Erfindung wird ein vorteilhaftes Verfahren bereitgestellt zur Herstellung von verschiedenartigen wäßrigen Überzugsmitteln auf Basis eines einheitlichen Bindemittelmoduls, das dadurch gekennzeichnet ist, daß man getrennt voneinander jeweils einen Vorrat an den erfindungsgemäßen Modulen A) bis E) bereitstellt und gegebenenfalls einlagert, und bei Bedarf die jeweils zur Erzielung der für die jeweilige Anwendung benötigten Module, wie z.B. zur Erzielung eines gewünschten Farbtons oder Effekts erforderlichen Mengen der bereitgestellten Module A) mit B) und/oder C) und/oder D) und/oder E) vermischt.

Die Herstellung der wäßrigen Überzugsmittel erfolgt durch einfaches Vermischen der Bindemittelmodule A) mit den Farbmodulen B), den Effektmodulen C), den Vernetzermodulen D) und/oder den Rheologiemodulen E). Je nach Wahl des zweiten notwendigen Modulbausteins bzw. weiterer möglicher Modulbausteine können dabei verschiedene Überzugsmittel, wie Basislacke, Einschicht-Decklacke oder Klarlacke hergestellt werden.

So können beispielsweise zur Herstellung von Klarlacken mindestens ein Bindemittelmodul und mindestens ein Vernetzermodul miteinander vermischt werden. Bevorzugt werden dabei Bindemittelmodule auf Basis einer Bindemittelkombination von kationischen (Meth)acrylcopolymerisatharzen und kationischen Polyesterpolyurethanharzen verwendet. Die bevorzugten Harze dazu sind die vorstehend für das Bindemittelmodul A) beschriebenen. Besonders bevorzugte Poly(meth)acrylatharze haben eine zahlenmittlere Molmasse (Mn) von 4000 - 50000, eine Hydroxylzahl von 60 - 175 mg KOH pro g Festharz und einer Glasübergangstemperatur von -20 bis +75°C. Die Aminzahl liegt bevorzugt bei 20 - 100 mg KOH pro g Festharz. Im Vernetzermodul sind als Vernetzungsmittel bevorzugt solche auf Basis blockierter oder nicht blockierter Polyisocyanate und/oder Melaminharze mit mindestens zwei gegenüber Amino- und/oder OH-Gruppen reaktiven Gruppen pro Molekül enthalten.

Vorzugsweise ist zur Herstellung von Klarlacken im erfindungsgemäßen Modul system mindestens ein Rheologiemodul enthalten. Mit einem separaten Rheologiemodul ist es möglich bei der Herstellung der Überzugsmittel noch nachträglich Einfluß auf die Rheologie zu nehmen. Sind die Rheologiemittel beispielsweise bereits im Bindemittelmodul A) enthalten, dann ist die Rheologie des gesamten Überzugsmittels bereits durch das Bindemittel festgelegt. Bevorzugt sind dabei als Rheologiemittel kationische Assoziativverdicker auf Polyurethan-Basis, wie sie bei der Beschreibung des Rheologiemoduls bereits genannt wurden.

Zur Herstellung von Klarlacken können im Modulsystem auch transparente Pigmente, zum Beispiel transparentes Titandioxid enthalten sein. Die transparenten Pigmente können in einem separaten Farbstoffmodul oder in einem der anderen vorhandenen Module enthalten sein.

Ein erfindungsgemäßes Modulsystem zur Herstellung von insbesondere Effekt-Basislacken besteht beispielsweise bevorzugt aus einem Bindemittelmodul A) basierend auf einer Bindemittelkombination aus einem kationischen Poly(meth)acrylatharz und einem kationischen Polyurethanharz und einem Effektmodul C) mit einer (meth)acrylierten Polyurethandispersion als Bindemittel und gegebenenfalls einem Farbmodul B) mit bevorzugt einem oder mehreren kationisch stabilisierten Polyesterurethanharzen als Bindemittel sowie einem Rheologiemodul E) mit bevorzugt kationischen Assoziativverdickern auf Polyurethanbasis. Die hierbei bevorzugt eingesetzten Harze sind im Bindemittelmodul beschrieben.

Zur Herstellung von insbesondere Uni-Basislacken und unifarbenen Einschicht-Decklacken kann das erfindungsgemäße Modulsystem bevorzugt mindestens ein Bindemittelmodul A) auf Basis einer Bindemittelkombination aus einem kationischen Poly(meth)acrylatharz und einem kationischen Polyesterurethanharz, mindestens ein Farbmodul, wobei das Farbmodul vorzugsweise vorstehend beschriebene kationische Polyurethanpastenharze enthält, und ein Rheologiemodul auf Basis kationischer Assoziativverdicker auf Polyurethanharzbasis enthalten. Sowohl bei den Uni-Basislacken als auch bevorzugt bei den uni-farbenen Einschichtdecklacken kann ein Vernetzermodul vorliegen, das beispielsweise Melaminharzvernetzer und/oder blockierte Polyisocyanate enthält. Die bevorzugten Harze sind vorstehend im Bindemittel- und Rheologiemodul beschrieben.

Bei der Herstellung der Überzugsmittel ist die Reihenfolge der Zugabe der Module beliebig. Bevorzugt werden jedoch die Module mit den höchsten Viskositäten und dem größten Volumenanteil vorgelegt. Nach dem Vermischen kann durch Zugabe von deionisiertem Wasser auf Applikationsviskosität eingestellt werden.

Die aus dem erfindungsgemäßen Modulsystem hergestellten Überzugsmittel haben bevorzugt einen Lösemittelanteil unter 20 Gew.-%, besonders bevorzugt unter 10 Gew.-%.

Die fertigen Überzugsmittel können direkt nach dem Vermischen appliziert werden. Sie können jedoch auch länger als 12 Monate gelagert werden. Im Falle bei Raumtemperatur vernetzbarer zweikomponentiger Überzugsmittel muß das Vernetzermodul jedoch getrennt gelagert werden.

Ein besonderer Vorteil des erfindungsgemäßen Modulsystems ist, daß in einfacher Weise aus einheitlichen Bausteinen verschiedenste Überzugsmittel bereitgestellt werden können. Diese Überzugsmittel bilden ebenfalls einen Gegenstand der vorliegenden Erfindung.

Dabei können bei der Herstellung der erfindungsgemäßen Überzugsmittel beispielsweise die im folgenden aufgeführten Mengenanteile eingesetzt werden. Die Mengenanteile beziehen sich auf den jeweiligen Festkörperanteil (FK) aus den einzelnen Modulen, die zum Gesamt-Überzugsmittel-Festkörpergehalt (100 Gew.-%) beitragen.

Bei der Herstellung von Effektwasserbasislacken beträgt der FK aus dem Bindemittelmodul bevorzugt 10 bis 99, besonders bevorzugt 40 bis 95 Gew.-%; der FK aus dem Farbmodul 0 bis 40, bevorzugt 0 bis 30 Gew.-%; der FK aus dem Effektmodul vorzugsweise 0,01 bis 50, besonders bevorzugt 1 bis 30 Gew.-%; der FK aus dem Vernetzermodul 0 bis 40, bevorzugt 0 bis 25 Gew.-% und der FK aus dem Rheologiemodul bevorzugt 0,01 bis 50, besonders bevorzugt 1 bis 40 Gew.-%. Der Effektwasserbasislack wird zur Erzielung der Applikationsviskosität bevorzugt auf einen Gesamt-Lackfestkörpergehalt von 10 bis 55 Gew.-%, besonders bevorzugt 12 bis 40 Gew.-% eingestellt.

Bei der Herstellung von Uni-Wasserbasislacken beträgt der FK aus dem Bindemittelmodul bevorzugt 5 bis 60 Gew.-%, besonders bevorzugt 8 bis 50 Gew.-%; aus dem Farbmodul bevorzugt 1 bis 60, besonders bevorzugt 3 bis 50 Gew.-%; aus dem Vernetzermodul 0 bis 40, bevorzugt 0 bis 25 Gew.-% und aus dem Rheologiemodul 0 bis 40, bevorzugt 1 bis 30 Gew.-%. Bevorzugt wird der Festkörpergehalt des Uni-Wasserbasislacks zur Applikationsviskosität auf 10 bis 60 Gew.-%, besonders bevorzugt 12 bis 45 Gew.-% eingestellt.

Zur Herstellung von Einschichtdecklacken beträgt der FK aus dem Bindemittelmodul bevorzugt 5 bis 60 Gew.-%, besonders bevorzugt 8 bis 50 Gew.-%; der FK aus dem Farbmodul bevorzugt 0,5 bis 60 Gew.-%, besonders bevorzugt 1 bis 45 Gew.-%; aus dem Effektmodul 0 bis 50 Gew.-%, bevorzugt 0 bis 30 Gew.-%; aus dem Vernetzermodul bevorzugt 0,5 bis 40 Gew.-%, besonders bevorzugt 1 bis 35 Gew.-% und aus dem Rheologiemodul 0 bis 40 Gew.-%, bevorzugt 1 bis 30 Gew.-%. Bei Applikationsviskosität beträgt der Gesamtfestkörper des Einschichtdecklacks bevorzugt 10 bis 70 Gew.-%, besonders bevorzugt 12 bis 50 Gew.-%.

Bei der Herstellung von Klarlacken beträgt der FK-Anteil aus dem Bindemittelmodul bevorzugt 15 bis 90 Gew.-%, besonders bevorzugt 35 bis 85 Gew.-%; aus dem Farbmodul 0 bis 20, bevorzugt 0 bis 10 Gew.-%; aus dem Effektmodul 0 bis 10, bevorzugt 0 bis 5 Gew.-%; aus dem Vernetzermodul bevorzugt 0,01 bis 50 Gew.-%, besonders bevorzugt 2 bis 40 Gew.-%; aus dem Rheologiemodul 0 bis 40 Gew.-%, besonders bevorzugt 1 bis 30 Gew.-%. Bei Applikationsviskosität beträgt der Gesamtlackfestkörpergehalt des Klarlacks bevorzugt 10 bis 80 Gew.-%, besonders bevorzugt 12 bis 65 Gew.-%.

Die aus dem erfindungsgemäßen Modulsystem hergestellten wäßrigen Überzugsmittel können nach üblichen Methoden, bevorzugt durch Spritzen appliziert werden. Die Härtung kann z.B. zwischen 20°C und 140°C erfolgen.

Eine bevorzugte Möglichkeit der Applikation besteht darin, einen mit dem erfindungsgemäßen Modulsystem hergestellten Basislack aufzubringen und nach einer Ablüftphase bei 20°C - 80°C im Naß-in-Naß-Verfahren einen üblichen oder einen mit dem erfindungsgemäßen Modulsystem hergestellten Klarlack zu applizieren und beide Schichten gemeinsam zu härten.

Die so erhaltenen Mehrschichtlackierungen entsprechen den heute üblichen Anforderungen in der Kraftfahrzeuglackierung. Sie sind geeignet für die Fahrzeugerstlackierung und -reparaturlackierung, sie können jedoch auch in anderen Bereichen, wie zum Beispiel der Kunststoff-, Holz- oder Keramiklackierung, eingesetzt werden.

Das erfindungsgemäße Modulsystem besteht aus einzelnen lagerstabilen Modulen, die sich einfach und gut miteinander vermischen lassen. Es lassen sich lösemittelarme, wäßrige Überzugsmittel mit guter Langzeitlagerstabilität herstellen. Es wird eine rationalisierte Lagerung und Fertigung der verschiedenen Überzugsmittel, wie Basislacke, Decklacke und Klarlacke, mit nur einem Modulsystem erreicht. Ein besonderer Vorteil des erfindungsgemäßen Systems und des erfindungsgemäßen Verfahrens besteht darin, daß verschiedenste Überzugsmittel auf der Basis einheitlicher Module bereitgestellt werden können.

Die folgenden Beispiele sollen die Erfindung näher erläutern.

### Herstellungsbeispiele für Bindemittel

### Herstellungsbeispiel 1:

966 g Ethoxypropanol werden unter Inertgas auf 100°C unter Einschalten eines Rückflußkühlers erwärmt. Innerhalb von 4 Stunden wird eine Mischung aus 195,5 g Hydroxyethylmethacrylat, 599 g Butandiolmonoacrylat, 592 g n-Butylmethacrylat, 483 g 2-Ethylhexylmethacrylat, 439 g Butylmethacrylat, 439 g Methymethacrylat, 893 g Styrol, 358 g 3-Dimethylaminopropylmethacrylamid und 46 g t-Butylperoctoat zugegeben. Danach wird 1 Stunde bei 110°C gehalten, 8,4 g t-Butylperoctoat in 12,2 g Ethoxypropanol gelöst zugegeben und dieser Vorgang nach einer weiteren Stunde wiederholt. Nach 3 Stunden 110°C werden die folgenden Zwischenwerte bestimmt:

| | |
|---|---|
| Festkörpergehalt | 79,6 % (30 Minuten 150°C) |
| Viskosität | 12,5 Pas (50 % in Ethoxypropanol bei 25°C) |

### Herstellung der wäßrigen Dispersion:

In 250 g des oben beschriebenen Aminoacrylates werden 4 g Ameisensäurelösung (50 % in Wasser) und 32,6 g Butylglykol gut eingearbeitet und anschließend 713,4 g VE-Wasser zur Dispersionsbildung zugegeben. Nach 2 Stunden Rühren erhält man eine feinteilige wäßrige Aminoacrylatdispersion.

### Kennwerte:

| | |
|---|---|
| Festkörpergehalt | 20,4 Gew.-% (60 Minuten 150°C) |
| MEQ-Säure | 21 mEqu/100 g Festharz |
| pH-Wert | 6,5 |

### Herstellungsbeispiel 2:

### (Herstellungsbeispiel 1 in der DE-A-4 011 633)

725 g Butoxyethanol werden unter Inertgas auf 110°C unter Einschalten eines Rückflußkühlers erwärmt. Innerhalb von 3 Stunden wird eine Mischung aus 192 g Hydroxyethylmethacrylat, 137 g Butandiolmonoacrylat, 228 g Glycidylmethacrylat, 364 g 2-Ethylhexylacrylat, 439 g Butylmethacrylat, 439 g Methymethacrylat, 90 g Styrol und 44 g Azobisisobutyronitril zugegeben. Danach wird 1 Stunde bei 110°C wird ein Festkörpergehalt von 72,2 Gew.-% und nach dem Verdünnen auf 60 Gew.-% mit Butoxyethanol eine Viskosität von 2,14 Pas bei 25°C gemessen. Nach dem Abkühlen auf 50°C werden ein Gemisch von 120 g Diethylamin und 201 g Isopropanol schnell zugegeben (1,10 Mol Amin auf 1,00 Mol Epoxid). Nach 30 Minuten wird auf 65°C erwärmt, dann 2 Stunden gehalten, anschließend auf 105 bis 110°C aufgeheizt und dann 3 Stunden gehalten. Nach dem Abkühlen auf 80°C wird unter Vakuum Isopropanol und Aminüberschuß sorgfältig abdestilliert. Einstellen des Festkörpergehaltes mit Butoxypropanol auf etwa 80 Gew.-%.

### Zwischenwerte:

| | |
|---|---|
| Festkörpergehalt | 79,7 % (30 Minuten 150°C) |
| Aminzahl | 45 mg KOH pro g Festharz |
| Viskosität | 3,44 Pas (60 % in Butxyethanol bei 25°C) |

### Herstellungsbeispiel 3:

In einem Reaktionsgefäß mit Rührer, Innenthermometer, Heizung und Rückflußkühler werden unter Inertgas 885 g eines Polyesterpolyols (hergestellt aus Neopentylglykol, Hexandiol und Isophthalsäure mit einer OH-Zahl von 102 und einer Säurezahl von 1) bei ca. 45°C gemischt mit 138 g Methyldiethanolamin und 300 g Aceton gemischt. Anschließend werden 410,5 g Isophorondiisocyanat zugegeben und die exotherme Reaktion durch Kühlen und Heizen bei 80°C gehalten, bis nahezu kein freies Isocyanat mehr nachgewiesen werden kann (NCO Zahl kleiner als 0,2). Es werden bei 40°C 88,6 g Milchsäure in 200 g Wasser zugesetzt und gut eingearbeitet. Danach werden zur Dispersionsbildung 2902 g VE-Wasser zugesetzt. Nach 2 Stunden Rühren bei Raumtemperatur erhält man eine feinteilige Polyurethandispersion.

### Endwerte:

| | |
|---|---|
| Festkörpergehalt | 34,2 Gew.-% (60 Minuten 150°C) |
| MEQ-Säure | 66 mEqu/100 Festharz |
| pH-Wert | 5,6 |

### Herstellungsbeispiel 4:

In einem Reaktionsgefäß mit Rührer, Innenthermometer, Heizung und Rückflußkühler werden unter Inertgas 912 g eines Polyesters (aufgebaut aus Adipinsäure, Isophthalsäure, Hexandiol 1-6 und Neopentylglykol mit einer OH-Zahl von 113 und einer Säurezahl von 1) bei ca. 45°C gemischt mit 191 g Methyldiethanolamin und 185 g N-Methylpyrrolidon. Anschließend werden 697 g Isophorondiisocyanat zugegeben und die exotherme Reaktion durch Kühlen und Heizen bei 80°C gehalten, bis die NCO-Zahl ca. 3,3 beträgt. Nach Zusatz von 185 g N-Methylpyrrolidon werden 184 g Hydroxyethylmethacrylat zugegeben und solange bei 60°C gehalten bis kein freies Isocyanat mehr nachgewiesen werden kann.

Es werden bei 40°C 74,1 g Ameisensäure in 152 g Wasser zugesetzt und gut eingearbeitet. Danach werden zur Dispersionsbildung 2026 g VE-Wasser zugesetzt. Nach 2 Stunden Rühren bei Raumtemperatur erhält man eine feinteilige Polyurethandispersion.

### Endwerte:

| | |
|---|---|
| Festkörpergehalt | 44,0 Gew.-% (60 Minuten 150°C) |
| Aminzahl | 45 mg KOH |

### Herstellungsbeispiel 5:

30 g der Polyurethandispersion aus Herstellungsbeispiel 4 werden mit 25 g VE-Wasser verdünnt und auf 80°C erwärmt. Eine Emulsion aus 0,23 g Hexandioldiacrylat, 0,45 g Laurylacrylat, 2,0 g Styrol, 1,2 g Ethylhexylacrylat, 1,6 g Hydroxyethylacrylat, 3,1 gn-Butylmethacrylat und 0,4 g Azoisobutyronitril in 14 g Polyurethandispersion aus Herstellungsbeispiel 4 und 10 g VE-Wasser wird über einen Zeitraum von 3,5 Stunden bei 80°C zudosiert. Danach wird diese Temperatur eine Stunde gehalten, danach eine Emulsion von 0,1 g Azoisobutyronitril in 2,3 g Polyurethandispersion aus Herstellungsbeispiel 4 zugesetzt und eine weitere Stunde bei 80°C gehalten. Man erhält eine feinteilige Dispersion mit folgenden Kennzahlen:

| | |
|---|---|
| Festkörpergehalt | 31,8 Gew.-% (1 Stunde 150°C) |
| Aminzahl | 32 mg KOH/g |
| pH-Wert | 5,1 |

### Herstellungsbeispiel 6:

In einem Reaktionsgefäß mit Rührer, Innenthermometer, Heizung und Rückflußkühler werden unter Inertgas 909 g eines Polycaprolactondiols mit einer OH-Zahl von 112 und einer Säurezahl von 1 bei ca. 45°C gemischt mit 141,5 g Methyldiethanolamin. Anschließend werden 442,5 Isophorondiisocyanat zugegeben und die exotherme Reaktion durch Kühlen und Heizen bei 80°C gehalten, bis nahezu kein freies Isocyanat mehr nachgewiesen werden kann (NCO Zahl kleiner als 0,2).

Es werden bei 60°C 96,5 g Milchsäure in 152 g Wasser zugesetzt und gut eingearbeitet. Danach werden zur Dispersionsbildung 2759 g VE-Wasser zugesetzt. Nach 2 Stunden Rühren bei Raumtemperatur erhält man eine feinteilige Polyurethandispersion.

### Endwerte:

| | |
|---|---|
| Festkörpergehalt | 33,5 Gew.-% (60 Minuten 150°C) |
| Aminzahl | 45 mg KOH |
| MEQ-Säure | 73 mEqu/100 Festharz |

### Herstellungsbeispiel 7:

In einem Reaktionsgefäß mit Rührer, Innenthermometer, Heizung und Rückflußkühler werden unter Inertgas 682,5 g eines Polyesterdiols (aufgebaut aus Neopentylglykol, Cyclohexandicarbonsäure und Isophalthalsäure mit einer OH-Zahl von 49 und einer Säurezahl von 1,3), 27 g Pentaerythrit, 148,3 Dodekanol und 508 g N-Methylpyrrolidon bei ca. 45°C gemischt mit 153 g Methyldiethanolamin. Anschließend werden 529 g Isophorondiisocyanat zugegeben und die exotherme Reaktion durch Kühlen und Heizen bei 80°C gehalten, bis nahezu kein freies Isocyanat mehr nachgewiesen werden kann (NCO Zahl kleiner als 0,2).

Es werden 50°C 118 g Ameisensäure (50 % in Wasser) zugesetzt und gut eingearbeitet. Danach werden zur Dispersionsbildung 2828 g VE-Wasser zugesetzt. Nach 2 Stunden Rühren bei Raumtemperatur erhält man eine feinteilige Polyurethandispersion.

### Endwerte:

| | |
|---|---|
| Festkörpergehalt | 32,3 Gew.-% (60 Minuten 150°C) |
| MEQ-Säure | 84 mEqu/100 g Festharz |
| pH-Wert | 5,2 |

**Herstellungsbeispiele für die einzelnen Module:**

### Bindemittelmodule:

Bei der Herstellung der Bindemittelmodule werden die jeweiligen Bestandteile unter Rühren gut miteinander vermischt:

### Bindemittelmodul I:

### Bestandteile:

| | |
|---|---|
| 172,0 g | Bindemittel (nach Herstellungsbeispiel 5) |
| 28,5 g | Bindemittel nach Herstellungsbeispiel 3 |
| 234,5 g | Bindemittel nach Herstellungsbeispiel 1 |
| 30,0 g | VE-Wasser |

### Bindemittelmodul II:

### Bestandteile:

| | |
|---|---|
| 70,4 g | Bindemittel nach Beispiel 1 |
| 5,3 g | Bindemittel nach Beispiel 3 |
| 4,3 g | VE-Wasser |

### Bindemittelmodul III:

### Bestandteile:

| | |
|---|---|
| 47,3 g | Bindemittel nach Beispiel 2 |
| 5,2 g | Bindemittel nach Beispiel 3 |
| 3,2 g | VE-Wasser |

### Bindemittelmodul IV:

### Bestandteile:

| | |
|---|---|
| 31,3 g | Bindemittel nach Beispiel 5 |
| 24,5 g | Bindemittel nach Beispiel 2 |
| 2,5 g | Bindemittel nach Beispiel 3 |
| 1,2 g | Butylglykol |
| 13,0 g | VE-Wasser |

### Rheologiemodul I:

100 g des Bindemittels nach Beispiel 7 werden mit 2 g Butylglykol und 10 g VE-Wasser gemischt.

### Effektmodule:

Bei der Herstellung der Effektmodule wird das jeweilige Effektpigment vorgelegt und anschließend werden Lösemittel und Benetzungsadditive und Bindemittel unter gutem Rühren zugegeben.

### Effektmodul I:

### Bestandteile:

| | |
|---|---|
| 8,4 g | einer handelsüblichen für Wasserbasislack geeigneten Aluminiumpaste mit 65 % Aluminium |
| 0,8 g | eines Aluminiumbenetzungsadditivs auf der Basis organischer Phosphorsäurederivate |
| 4,9 g | Butylglykol |
| 2,0 g | N-Methylpyrrolidon |
| 4,5 g | n-Butanol |
| 8,0 g | Bindemittel nach Herstellungsbeispiel 5 |

Das Modul weist einen Wassergehalt von 8,9 Gew.-% auf.

### Effektmodul II:

### Bestandteile:

| | |
|---|---|
| 12,8 g | eines handelsüblichen Iriodinpigmentes |
| 2,7 g | eines handelsüblichen Benetzungsadditivs |
| 2,7 g | n-Butanol |
| 1,1 g | N-Methylpyrrolidon |
| 8,0 g | Bindemittel nach Herstellungsbeispiel 5 |

Das Effektmodul weist einen Wassergehalt von 9,3 Gew.-% auf.

### Farbmodule:

### Farbmodul Blau:

| | |
|---|---|
| 41,1 g | Bindemittel nach Beispiel 6 |
| 1,1 g | eines handelsüblichen Dispergierhilfsmittels |
| 0,6 g | Butylglykol |
| 33,9 g | eines handelsüblichen blauen Kupferphthalalocyanin-Pigmentes |
| 10,5 g | VE-Wasser |

### Farbmodul Rot:

### Bestandteile:

| | |
|---|---|
| 44,0 g | Bindemittel nach Beispiel 6 |
| 1,6 g | eines handelsüblichen Dispergierhilfsmittels |
| 2,9 g | Butylglykol |
| 34,5 g | eines handelsüblichen roten Pigmentes |
| 17,1 g | VE-Wasser |

### Farbmodul Schwarz:

### Bestandteile:

| | |
|---|---|
| 48,9 g | Bindemittel nach Beispiel 6 |
| 1,2 g | eines handelsüblichen Dispergierhilfsmittels |
| 5,0 g | Butylglykol |
| 13,5 g | eines handelsüblichen Ruß-Pigmentes |
| 15,6 g | VE-Wasser |

Das Pigment wird in der angegebenen Mischung mit einem geeignetem Aggregat angerieben.

### Vernetzermodul:

### Vernetzermodul I (Melaminharzmischung):

| | |
|---|---|
| 6,5 g | Cymel 373 |
| 3,5 g | VE-Wasser |

### Vernetzermodul II:

| | |
|---|---|
| 9,7 g | Luwipal 012 |
| 2,0 g | eines handelsüblichen mit butanonoximblockierten Isocyanats auf Isophorondiisocyanatbasis |
| 1,3 g | Butylglykol |

### Vernetzermodul III:

| | |
|---|---|
| 3,0 g | Cymel 327 |
| 7,0 g | VE-Wasser |

### Vernetzermodul IV:

| | |
|---|---|
| 8,1 g | Setamin US 138 |
| 6,9 g | Butylglykol |

### Herstellung von wäßrigen Basislacken

Durch gleichmäßiges Vermischen der in der Tabelle angegebenen Module werden lagerstabile, wäßrige Effektbasislacke hergestellt. Sie werden mit Wasser auf die gewünschte Verarbeitungsviskosität eingestellt. Die angegebenen Zahlen sind Gewichtsteile.

### Effektbasislacke:

| | A Silbermetallic | B Silbermetallic | C Silber | D Blaumetallic |
|---|---|---|---|---|
| Bindemittel-modul I | 68,9 | 71,2 | | |
| Bindetmittel-modul IV | | | 72,6 | 72,6 |
| Effektmodul I | 15,0 | | 15,0 | 15,0 |
| Effektmodul II | | 20,1 | | |
| Rheologiemodul I | 8,5 | 9,0 | 10,5 | 10,5 |
| Vernetzermodul I | | | 10 | 10 |
| Farbmodul blau | | | | 4 |

### Uniwasserbasis- und UNI-Einschicht-Decklacke:

| | A blau | B schwarz | C rot | D rot | E Decklack |
|---|---|---|---|---|---|
| Bindemittel-modul II | 80,6 | 76,5 | 76,2 | | 75,5 |
| Bindemittel-modul III | | | | 55,7 | |
| Rheologiemodul I | 10,4 | 9,6 | 7,8 | 10,4 | 10,5 |
| Vernetzermodul III | | | | 10 | 11 |
| Farbmodul blau | 10,5 | | | | 13,4 |
| Farbmodul rot | | | 12,45 | 15,9 | |
| Farbmodul schwarz | | 14,23 | | | |

Durch Mischung der oben angegebenen Komponenten erhält man wäßrige UNI-Lacke. Sie werden mit Wasser auf die jeweils gewünschte Applikationsviskosität eingestellt.

Sie können als Wasserbasis- und UNI-Einschicht-Decklacke eingesetzt werden.

### Wasserklarlack

| | A | B | C | D | E |
|---|---|---|---|---|---|
| Bindemittelmodul II | 76,2 | 76,5 | 76,2 | 76,5 | 76,5 |
| Verdickermodul I | 9,0 | 9,6 | 9,0 | 10,2 | 9,6 |
| Vernetzermodul I | 10,0 | | | | 6,5 |
| Vernetzermodul II | | 13,2 | | | |
| Vernetzermodul III | | | 10,0 | | |
| Vernetzermodul IV | | | | 15,0 | 10,5 |

## Patentansprüche

1. Modulsystem zur Herstellung von wäßrigen Überzugsmitteln, enthaltend
A) mindestens ein wäßriges, ein oder mehrere kationisch stabilisierte wasserverdünnbare (Meth)acrylcopolymere und ein oder mehrere kationisch stabilisierte wasserverdünnbare Polyurethanharze und/oder ein oder mehrere kationisch stabilisierte wasserverdünnbare (meth)acrylierte Polyurethanharze, gegebenenfalls in Kombination mit nicht-ionisch stabilisierten wasserverdünnbaren Bindemitteln, Wasser sowie gegebenenfalls ein oder mehrere organische Lösemittel und/oder lackübliche Additive enthaltendes Bindemittelmodul, zusammen mit mindestens einem der folgenden Module:
B) ein oder mehrere Wasser enthaltende, ein oder mehrere Farbpigmente und/oder Füllstoffe und ein oder mehrere kationisch stabilisierte Polyurethan-Pastenharze, mindestens 6 Gew.-% Wasser, sowie gegebenenfalls ein oder mehrere wasserverdünnbare kationisch und gegebenenfalls nicht-ionisch stabilisierte Bindemittel, ein oder mehrere organische Lösemittel und/oder lackübliche Additive enthaltende Farbmodule, und/oder
C) ein oder mehrere Wasser enthaltende, ein oder mehrere Effektpigmente, mindestens 6 Gew.-% Wasser, ein oder mehrere kationisch stabilisierte wasserverdünnbare (meth)acrylierte Polyurethanharze, die gegebenenfalls in Kombination mit weiteren kationisch oder nicht-ionisch stabilisierten wasserverdünnbaren Bindemitteln vorliegen können sowie gegebenenfalls ein oder mehrere organische Lösemittel und/oder lackübliche Additive enthaltende Effektmodule und/oder
D) ein oder mehrere, ein oder mehrere Vernetzungsmittel sowie gegebenenfalls ein oder mehrere organische Lösemittel, Wasser und/oder lackübliche Additive enthaltende Vernetzermodule, und/oder
E) ein oder mehrere, ein oder mehrere organische und/oder anorganische die Rheologie steuernde Mittel sowie gegebenenfalls ein oder mehrere kationisch, oder kationisch und nicht-ionisch und/oder nicht-ionisch stabilisierte wasserverdünnbare Bindemittel und/oder ein oder mehrere organische Lösemittel und/oder Wasser enthaltende Rheologiemodule.

2. Verfahren zur Herstellung von wäßrigen Überzugsmitteln durch Vermischen von mindestens einer wäßrigen Bindemittelkomponente mit weiteren Überzugsmittel-Komponenten, dadurch gekennzeichnet, daß man getrennt voneinander jeweils einen Vorrat an mindestens einem lagerstabilen Bindemittelmodul A) nach Anspruch 1, sowie mindestens jeweils ein lagerstabiles Modul B), C), D) und/oder E) nach Anspruch 1 bereitstellt und gegebenenfalls einlagert, und bei Bedarf die bereitgestellten einzelnen Module in solchen Mengen miteinander vermischt, daß der aus ihnen stammende Festkörpergehalt (FK), bezogen auf den Gesamtfestkörpergehalt des Überzugsmittels, jeweils die folgenden prozentualen Werte annimmt:
| | |
|---|---|
| Bindemittelmodule A) | 5 - 99 Gew.-% |
| Farbmodule B) | 0 - 60 Gew.-% |
| Effektmodule C) | 0 - 50 Gew.-% |
| Vernetzermodule D) | 0 - 50 Gew.-% |
| Rheologiemodule E) | 0 - 50 Gew.-% |
wobei die Summe der prozentualen Werte 100 % betragen soll.

3. Modul system und Verfahren nach Anspruch 1 oder 2, dadurch gekennzeichnet, daß im Bindemittelmodul A) 10 - 99 Gew.-% des kationisch stabilisierten (Meth)acrylcopolymeren, 2 - 70 Gew.-% des kationisch stabilisierten Polyurethanharzes und 0,2 - 60 Gew.-% des kationisch stabilisierten (meth)acrylierten Polyurethanharzes enthalten sind, wobei sich die Prozentangaben auf den Gesamt-Bindemittelfestkörpergehalt im Bindemittelmodul beziehen und sich zu 100 % addieren sollen.

4. Modulsystem und Verfahren nach einem der vorhergehenden Ansprüche, dadurch gekennzeichnet, daß die Farbmodule B) und Effektmodule C) jeweils mindestens 10 Gew.-% Wasser enthalten.

5. Modulsystem und Verfahren nach einem der vorhergehenden Ansprüche, dadurch gekennzeichnet, daß ein oder mehrere kationisch stabilisierte (Meth)acrylcopolymere mit einer OH-Zahl von 30 bis 200, einem Zahlenmittel der Molmasse (Mn) von 1000 bis 200000 und einer Aminzahl von 15 bis 150 eingesetzt werden.

6. Modulsystem und Verfahren nach einem der Ansprüche 1 bis 4, dadurch gekennzeichnet, daß ein oder mehrere kationisch stabilisierte Polyurethanharze mit einem Zahlenmittel der Molmasse (Mn) von 3000 bis 200000 und einer Aminzahl von 15 bis 120 eingesetzt werden.

7. Modulsystem und Verfahren nach einem der Ansprüche 1 bis 4, dadurch gekennzeichnet, daß ein oder mehrere kationisch stabilisierte (meth)acrylierte Polyurethanharze mit einer Aminzahl von 5 bis 150 und einer OH-Zahl von 0 bis 150 eingesetzt werden.

8. Modul system und Verfahren nach einem der vorhergehenden Ansprüche, dadurch gekennzeichnet, daß die Bindemittelmodule einen pH-Wert von 5 bis 7 haben.

9. Modulsystem und Verfahren nach einem der vorhergehenden Ansprüche, dadurch gekennzeichnet, daß die Vernetzermodule ein oder mehrere Melaminharze und/oder blockierte oder nicht-blockierte Polyisocyanate enthalten.

10. Modulsystem und Verfahren nach einem der vorhergehenden Ansprüche, dadurch gekennzeichnet, daß die Rheologiemodule Polymermikroteilchen, anorganische Schichtsilikate und/oder Assoziativverdicker enthalten.

11. Modulsystem und Verfahren nach Anspruch 10, dadurch gekennzeichnet, daß als Assoziativverdicker ein oder mehrere kationische Assoziativverdicker auf der Basis von Polyurethanharzen mit hydrophilen Segmenten in der Hauptkette und hydrophoben Segmenten an den Kettenenden mit einer Aminzahl von 5 bis 100 und einer OH-Zahl von 0 bis 70 eingesetzt werden.

12. Verfahren nach einem der vorhergehenden Ansprüche, dadurch gekennzeichnet, daß der Gesamtfestkörpergehalt der Überzugsmittel bei Applikationsviskosität auf 10 bis 80 Gew.-% eingestellt wird.

13. Verfahren nach Anspruch 12, dadurch gekennzeichnet, daß Effektwasserbasislacke, Uni-Wasserbasislacke, wäßrige Einschichtdecklacke und/oder wäßrige Klarlacke unter Verwendung der gleichen Bindemittel-Module hergestellt werden.

14. Verfahren nach Anspruch 2, 12 oder 13, dadurch gekennzeichnet, daß ein Effektwasserbasislack hergestellt wird mit einem Anteil entsprechend dem in Anspruch 2 definierten FK an:
Bindemittelmodul von 10 bis 99 Gew.-%,
Farbmodul von 0 bis 40 Gew.-%,
Effektmodul von 0,01 bis 50 Gew.-%,
Vernetzermodul von 0 bis 40 Gew.-%,
Rheologiemodul von 0,01 bis 50 Gew.-%,
wobei auf einen Festkörpergehalt des Überzugsmittels bei Applikationsviskosität von 10 bis 55 Gew.-% eingestellt wird.

15. Verfahren nach Anspruch 2, 12 oder 13 dadurch gekennzeichnet, daß ein Uni-Wasserbasislack hergestellt wird mit einem Anteil entsprechend dem in Anspruch 2 definierten FK an:
Bindemittelmodul von 5 bis 60 Gew.-%,
Farbmodul von 1 bis 60 Gew.-%,
Vernetzermodul von 0 bis 40 Gew.-%,
Rheologiemodul von 0 bis 40 Gew.-%,
wobei auf einen Festkörpergehalt des Überzugsmittels bei Applikationsviskosität von 10 bis 60 Gew.-% eingestellt wird.

16. Verfahren nach Anspruch 2, 12 oder 13, dadurch gekennzeichnet, daß ein wäßriger Einschichtdecklack hergestellt wird mit einem Anteil entsprechend dem in Anspruch 2 definierten FK an:
Bindemittelmodul von 5 bis 60 Gew.-%,
Farbmodul von 0,5 bis 60 Gew.-%,
Effektmodul von 0 bis 50 Gew.-%,
Vernetzermodul von 0,5 bis 40 Gew.-%,
Rheologiemodul von 0 bis 40 Gew.-%,
wobei auf einen Festkörpergehalt des Überzugsmittels bei Applikationsviskosität von 10 bis 70 Gew.-% eingestellt wird.

17. Verfahren nach Anspruch 2, 12 oder 13, dadurch gekennzeichnet, daß ein wäßriger Klarlack hergestellt wird mit einem Anteil entsprechend dem in Anspruch 2 definierten FK an:
Bindemittelmodul von 15 bis 90 Gew.-%,
Farbmodul von 0 bis 20 Gew.-%,
Effektmodul von 0 bis 10 Gew.-%,
Vernetzermodul von 0,01 bis 50 Gew.-%,
Rheologiemodul von 0 bis 40 Gew.-%,
wobei auf einen Festkörpergehalt des Überzugsmittels bei Applikationsviskosität von 10 bis 80 Gew.-% eingestellt wird.

18. Wäßrige Überzugsmittel, hergestellt nach dem Verfahren eines der Ansprüche 2 bis 17.

## Claims

1. A modular system for producing aqueous coating media, containing
A) at least one aqueous binder vehicle module, which contains one or more cationically stabilised, water-thinnable (meth)acrylic copolymers and one or more cationically stabilised, water-thinnable polyurethane resins and/or one or more cationically stabilised, water-thinnable (meth)acrylated polyurethane resins, optionally in combination with non-ionically stabilised, water-thinnable binder vehicles, water, and optionally one or more organic solvents and/or customary lacquer additives, together with at least one of the following modules:
B) one or more colour modules, containing water, one or more colouring pigments and/or extenders and one or more cationically stabilised polyurethane paste resins, at least 6 % by weight water, and optionally containing one or more water-thinnable, cationically and optionally non-ionically stabilised binder vehicles, one or more organic solvents and/or customary lacquer additives, and/or
C) one or more effect modules, containing water, one or more effect pigments, at least 6 % by weight water, one or more cationically stabilised, water-thinnable (meth)acrylated polyurethane resins, which may optionally be present in combination with other cationically or non-ionically stabilised, water-thinnable binder vehicles, and optionally containing one or more organic solvents and/or customary lacquer additives, and/or
D) one or more crosslinking modules, containing one or more crosslinking agents and optionally containing one or more organic solvents, water and/or customary lacquer additives, and/or
E) one or more rheology modules, containing one or more organic and/or inorganic media which control the rheology, and optionally containing one or more cationically stabilised, or cationically and non-ionically stabilised and/or non-ionically stabilised, water-thinnable binder vehicles and/or one or more organic solvents and/or water.

2. A process for producing aqueous coating media by mixing at least one aqueous binder vehicle component with other coating media components, characterised in that, separately from each other in each case, a supply is provided, and is optionally stored, of at least one binder vehicle module A) according to claim 1, which is stable on storage, and of at least one each of a module B), C), D) and/or E) according to claim 1, which are stable on storage, and when required the separate modules provided are mixed with each other in amounts such that the solids content (SC) which results from them, with respect to the total solids content of the coating medium, assumes the following percentage values in each case:
| | |
|---|---|
| binder vehicle module A) | 5 - 99 % by weight |
| colour module B) | 0 - 60 % by weight |
| effect module C) | 0 - 50 % by weight |
| crosslinking module D) | 0 - 50 % by weight |
| rheology module E) | 0 - 50 % by weight |
where the sum of the percentage values should amount to 100 %.

3. A modular system and process according to claim 1 or 2, characterised in that binder vehicle module A) contains 10 - 99 % by weight of the cationically stabilised (meth)acrylic copolymer, 2 - 70 % by weight of the cationically stabilised polyurethane resin, and 0.2 - 60 % by weight of the cationically stabilised (meth)acrylated polyurethane resin, wherein the percentage values are given with respect to the total binder vehicle solids content in the binder vehicle module and should add up to 100 %.

4. A modular system and process according to any one of the preceding claims, characterised in that colour module B) and effect module C) each contain at least 10 % by weight water.

5. A modular system and process according to any one of the preceding claims, characterised in that one or more cationically stabilised (meth)acrylic copolymers are used which have an OH number of 30 to 200, a number average molecular weight (Mn) of 1000 to 200,000 and an amine number of 15 to 150.

6. A modular system and process according to any one of claims 1 to 4, characterised in that one or more cationically stabilised polyurethane resins are used which have a number average molecular weight (Mn) of 3000 to 200,000 and an amine number of 15 to 120.

7. A modular system and process according to any one of claims 1 to 4, characterised in that one or more cationically stabilised (meth)acrylated polyurethane resins are used which have an amine number of 5 to 150 and an OH number of 0 to 150.

8. A modular system and process according to any one of the preceding claims, characterised in that the binder vehicle modules have a pH of 5 to 7.

9. A modular system and process according to any one of the preceding claims, characterised in that the crosslinking modules contain one or more melamine resins and/or blocked or non-blocked polyisocyanates.

10. A modular system and process according to any one of the preceding claims, characterised in that the rheology modules contain polymer microparticles, inorganic layer silicates and/or associative thickeners.

11. A modular system and process according to claim 10, characterised in that one or more cationic associative thickeners based on polyurethane resins with hydrophilic segments within their main chain and hydrophobic segments at their chain ends, and with an amine number of 5 to 100 and an OH number of 0 to 70, are used as associative thickeners.

12. A process according to any one of the preceding claims, characterised in that the total solids content of the coating media is adjusted to 10 to 80 % by weight at the application viscosity.

13. A process according to claim 12, characterised in that aqueous effect base lacquers, single-colour aqueous base lacquers, aqueous single-coat covering lacquers and/or aqueous clear lacquers are produced using the same binder vehicle modules.

14. A process according to claims 2, 12, or 13, characterised in that an aqueous effect base lacquer is produced which has a content, corresponding to the SC defined in claim 2, of:
10 to 99 % by weight of binder vehicle module,
0 to 40 % by weight of colour module,
0.01 to 50 % by weight of effect module,
0 to 40 % by weight of crosslinking module,
0.01 to 50 % by weight of rheology module,
wherein the solids content of the coating medium is adjusted to 10 to 55 % by weight at the application viscosity.

15. A process according to claims 2, 12, or 13, characterised in that an single-colour aqueous base lacquer is produced which has a content, corresponding to the SC defined in claim 2, of:
5 to 60 % by weight of binder vehicle module,
1 to 60 % by weight of colour module,
0 to 40 % by weight of crosslinking module,
0 to 40 % by weight of rheology module,
wherein the solids content of the coating medium is adjusted to 10 to 60 % by weight at the application viscosity.

16. A process according to claims 2, 12, or 13, characterised in that an aqueous single-coat covering lacquer is produced which has a content, corresponding to the SC defined in claim 2, of:
5 to 60 % by weight of binder vehicle module,
0.5 to 60 % by weight of colour module,
0 to 50 % by weight of effect module,
0.5 to 40 % by weight of crosslinking module,
0 to 40 % by weight of rheology module,
wherein the solids content of the coating medium is adjusted to 10 to 70 % by weight at the application viscosity.

17. A process according to claims 2, 12, or 13, characterised in that an aqueous clear lacquer is produced which has a content, corresponding to the SC defined in claim 2, of:
15 to 90 % by weight of binder vehicle module,
0 to 20 % by weight of colour module,
0 to 10 % by weight of effect module,
0.01 to 50 % by weight of crosslinking module,
0 to 40 % by weight of rheology module,
wherein the solids content of the coating medium is adjusted to 10 to 80 % by weight at the application viscosity.

18. Aqueous coating media produced by the process of one of claims 2 to 17.

## Revendications

1. Système modulaire pour la préparation de produits de revêtement aqueux, contenant
A) au moins un module de liant aqueux contenant un ou plusieurs copolymères (méth)acryliques diluables à l'eau à stabilisation cationique et une ou plusieurs résines de polyuréthannes diluables à l'eau à stabilisation cationique et/ou une ou plusieurs résines de polyuréthannes (méth)acrylées, diluables à l'eau, à stabilisation cationique, le cas échéant en combinaison avec des liants diluables à l'eau, à stabilisation non-ionique, de l'eau et, le cas échéant, un ou plusieurs solvants organiques, et/ou des additifs usuels pour les peintures et vernis, avec au moins un des modules suivants :
B) un ou plusieurs modules de couleur contenant de l'eau, un ou plusieurs pigments colorés et/ou matières de charge et une ou plusieurs résines de polyuréthannes en pâte à stabilisation cationique, au moins 6 % en poids d'eau et le cas échéant un ou plusieurs liants diluables à l'eau, à stabilisation cationique et le cas échéant non-ionique, un ou plusieurs solvants organiques et/ou des additifs usuels pour peintures et vernis,
et/ou
C) un ou plusieurs modules à effet contenant de l'eau, un ou plusieurs pigments à effet, au moins 6 % en poids d'eau, une ou plusieurs résines de polyuréthannes (méth)acrylées diluables à l'eau, à stabilisation cationique, le cas échéant en combinaison avec d'autres liants diluables à l'eau à stabilisation cationique ou non-ionique et le cas échéant un ou plusieurs solvants organiques et/ou des additifs usuels pour peintures et vernis,
et/ou
D) un ou plusieurs modules réticulants contenant un ou plusieurs agents réticulants et le cas échéant un ou plusieurs solvants organiques, de l'eau et/ou des additifs usuels pour peintures et vernis,
et/ou
E) un ou plusieurs modules rhéologiques contenant un ou plusieurs agents organiques et/ou minéraux agissant sur les propriétés rhéologiques et le cas échéant un ou plusieurs diluants diluables à l'eau à stabilisation cationique ou cationique et non-ionique et/ou non-ionique et/ou un ou plusieurs solvants organiques et/ou de l'eau.

2. Procédé pour la préparation de produits de revêtement aqueux par mélange d'au moins un composant liant aqueux avec d'autres composants pour produits de revêtement, caractérisé en ce que l'on prépare, séparément les unes des autres, une réserve d'au moins un module de liant A) stable à la conservation selon revendication 1 et d'au moins un module B), C), D) et/ou E) stables à la conservation selon revendication 1 et le cas échéant on les stocke, et en fonction des besoins, on mélange les modules individuels entre eux en quantités telles que les proportions des matières solides provenant de chacun d'eux, et par rapport aux matières solides totales du produit de revêtement, satisfont aux relations suivantes, en pour-cent :
| | |
|---|---|
| module de liant A) | 5 à 99 % en poids |
| module de couleur B) | 0 à 60 % en poids |
| module à effet C) | 0 à 50 % en poids |
| module réticulant D) | 0 à 50 % en poids |
| module rhéologique E) | 0 à 50 % en poids, |
la somme des pourcentages indiquée représentant 100 %.

3. Système modulaire et procédé selon revendication 1 ou 2, caractérisé en ce que, dans le module de liant A), il y a 10 à 99 % en poids du copolymère (méth)acrylique à stabilisation cationique, 2 à 70 % en poids de la résine de polyuréthanne à stabilisation cationique et 0,2 à 60 % en poids de la résine de polyuréthanne (méth)acrylée à stabilisation cationique, ces pourcentages se rapportant à la teneur totale en matières solides du liant dans le module de liant et se complétant à 100 %.

4. Système modulaire et procédé selon une des revendications qui précèdent, caractérisés en ce que le module de couleur B) et le module à effet C) contiennent chacun au moins 10 % en poids d'eau.

5. Système modulaire et procédé selon une des revendications qui précèdent, caractérisé en ce que l'on utilise un ou plusieurs copolymères (méth)acryliques à stabilisation cationique d'un indice d'OH de 30 à 200, à une masse moléculaire moyenne, moyenne en nombre Mn, de 1 000 à 200 000 et un indice d'amine de 15 à 150.

6. Système modulaire et procédé selon une des revendications 1 à 4, caractérisé en ce que l'on utilise une ou plusieurs résines de polyuréthanne à stabilisation cationique de masse moléculaire moyenne, moyenne en nombre, Mn, 3 000 à 200 000, indice d'amine 15 à 120.

7. Système modulaire et procédé selon une des revendications 1 à 4, caractérisé en ce que l'on utilise une ou plusieurs résines de polyuréthanne (méth)acrylée à stabilisation cationique ayant un indice d'amine de 5 à 150 et un indice d'OH de 0 à 150.

8. Système modulaire et procédé selon une des revendications qui précèdent, caractérisés en ce que le module de liant a un pH de 5 à 7.

9. Système modulaire et procédé selon une des revendications qui précèdent, caractérisés en ce que le module réticulant contient une ou plusieurs résines de mélamine et/ou des polyisocyanates bloqués ou non.

10. Système modulaire et procédé selon une des revendications qui précèdent, caractérisés en ce que le module rhéologique contient des microparticules de polymères, des silicates minéraux lamellaires et/ou des agents épaississants associatifs.

11. Système modulaire et procédé selon revendication 10, caractérisés en ce que l'on utilise en tant qu'agents épaississants associatifs un ou plusieurs agents épaississants associatifs cationiques à base de résines de polyuréthanne à segments hydrophiles dans la chaîne principale et à segments hydrophobes aux extrémités de chaîne, avec un indice d'amine de 5 à 100 et un indice d'OH de 0 à 70.

12. Procédé selon une des revendications qui précèdent, caractérisé en ce que l'on règle la teneur totale en matières solides des produits de revêtement dans l'intervalle de 10 à 80 % en poids à la viscosité d'application.

13. Procédé selon revendication 12, caractérisé en ce que l'on prépare des peintures de base aqueuses à effet, des peintures de base aqueuses unies, des peintures de couverture aqueuses en une couche et/ou des vernis clairs aqueux à l'aide des mêmes modules de liants.

14. Procédé selon revendications 2, 12 ou 13, caractérisé en ce que l'on prépare une peinture de base aqueuse à effet à des teneurs en matières solides, telles que définies dans la revendication 2, de :
| | |
|---|---|
| 10 à 99 % | en poids provenant du module de liant, |
| 0 à 40 % | en poids provenant du module de couleur, |
| 0,01 à 50 % | en poids provenant du module à effet, |
| 0 à 40 % | en poids provenant du module réticulant, |
| 0,01 à 50 % | en poids provenant du module rhéologique, |
la teneur en matières solides du produit de revêtement étant réglée dans l'intervalle de 10 à 55 % en poids à la viscosité d'application.

15. Procédé selon revendications 2, 12 ou 13, caractérisé en ce que l'on prépare une peinture de base aqueuse unie dont les proportions de matières solides, telles que définies dans la revendication 2, sont de :
| | |
|---|---|
| 5 à 60 % | en poids provenant du module de liant, |
| 1 à 60 % | en poids provenant du module de couleur, |
| 0 à 40 % | en poids provenant du module réticulant, |
| 0 à 40 % | en poids provenant du module rhéologique, |
la teneur totale en matières solides du produit de revêtement étant réglée dans l'intervalle de 10 à 60 % en poids à la viscosité d'application.

16. Procédé selon revendications 2, 12 ou 13, caractérisé en ce que l'on prépare une peinture de couverture aqueuse en une couche, à des proportions en matières solides, correspondant à la définition donnée dans la revendication 2, de
| | |
|---|---|
| 5 à 60 % | en poids provenant du module de liant, |
| 0,5 à 60 % | en poids provenant du module de couleur, |
| 0 à 50 % | en poids provenant du module à effet, |
| 0,5 à 40 % | en poids provenant du module réticulant, |
| 0 à 40 % | en poids provenant du module rhéologique, |
la teneur en matières solides du produit de revêtement étant réglée dans l'intervalle de 10 à 70 % en poids à la viscosité d'application.

17. Procédé selon revendications 2, 12 ou 13, caractérisé en ce que l'on prépare un vernis clair aqueux à des proportions de matières solides, telles que définies dans la revendication 2, de
| | |
|---|---|
| 15 à 90 % | en poids pour le module de liant, |
| 0 à 20 % | en poids pour le module de couleur, |
| 0 à 10 % | en poids pour le module à effet, |
| 0,01 à 50 % | en poids pour le module réticulant, |
| 0 à 40 % | en poids pour le module rhéologique, |
la teneur en matières solides du produit de revêtement étant réglée dans l'intervalle de 10 à 80 % en poids à la viscosité d'application.

18. Produits de revêtement aqueux préparés par le procédé selon une des revendications 2 à 17.
